# EUROPÄISCHE PATENTANMELDUNG

(11) **EP 4 336 121 A1**
(43) Veröffentlichungstag der Anmeldung: **13.03.2024**
(21) Anmeldenummer: 23196436.2
(22) Anmeldetag: 11.09.2023
(51) Int. Cl.: F24S 10/70, F24S 25/20, H02S 40/44, F24S 20/00, H01L 31/052

(54) **PHOTOTHERMIE-MODUL**

(30) Priorität: 12.09.2022 DE 102022123134
(71) Anmelder: PVT Solar AG, 6035 Perlen (CH)
(72) Erfinder: GEISSBÜHLER, Michael, 6035 Perlen (CH)
(74) Vertreter: Heilein, Ernst-Peter

(57) **Zusammenfassung**

Die vorliegende Erfindung betrifft ein Photothermie-Modul (1) wenigstens umfassend: ein Photovoltaik-Modul (10) und wenigstens ein Wärmetauscher-Modul (20) mit einer, mit einem Wärmeabsorber (21) wirkverbundene Rohrleitung (22) zur Aufnahme von Wärmeenergie vom Wärmeabsorber (21) und Leitung eines Wärmetauschermediums. Es zeichnet sich dadurch aus, dass der Wärmeabsorber (21) als ein Bauteil mit Sattelprofil ausgestaltet ist, dessen Aufnahmebereich (2121) eingereicht ist, besagte Rohrleitung (22) aufzunehmen und dass das Wärmetauscher-Modul (20) wenigstens ein Niederhalteelement (23; 231; 232) umfasst, welches eingerichtet ist, die Rohrleitung (22) samt Wärmeabsorber (21) gegen eine Unterseite (102) des Photovoltaik-Moduls (10) zu drücken. Das erfindungsgemäße Photothermie-Modul (1) weist durch die Bauart des Wärmetauscher-Moduls (20) vorteilhaft eine hohe Eigen-Quersteifigkeit auf, arbeitet besonders energieeffizient und lässt sich vorteilhaft dennoch leicht technisch warten bzw. umrüsten, da die Unterseite (US) des Photothermie-Moduls (1) größtenteils zugänglich bleibt.

## Beschreibung

Die vorliegende Erfindung betrifft ein Photothermie-Modul wenigstens umfassend:
- ein Photovoltaik-Modul mit einer Oberseite, einer Unterseite und einem entlang von Längsseiten und/oder Querseiten des Photovoltaik-Moduls verlaufenden Rahmen,
- wenigstens ein Wärmetauscher-Modul mit Längsseiten und Querseiten
   - wobei das Wärmetauscher-Modul wenigstens einen Wärmeabsorber zum Wärmeaustausch mit dem Photovoltaik-Modul und
   - wenigstens eine mit dem Wärmeabsorber wirkverbundene Rohrleitung zur Aufnahme von Wärmeenergie vom Wärmeabsorber und Leitung eines Wärmetauschermediums umfasst,
      - wobei die Rohrleitung wenigstens einen Querabschnitt, der parallel zu den Querseiten des Wärmetauscher-Moduls verläuft und wenigstens einen Längsabschnitt, der entlang der Längsseiten des Wärmetauscher-Moduls verläuft, umfasst.

Bei der Umwandlung von Sonnenstrahlung in elektrische Energie mittels konventioneller Photovoltaik (PV)-Module können lediglich ca. 17 % der eingestrahlten Sonnenenergie direkt in elektrische Energie umgewandelt werden, ungefähr 10 % der solaren Einstrahlungsleistung werden vom PV-Modul reflektiert, die restlichen 73 % werden in thermische Leistung umgewandelt. Reine PV-Module können diese thermische Leistung nicht nutzen, durch Erhöhung der Zellentemperatur hat sie sogar einen negativen Einfluss auf die elektrische Effizienz des Moduls, weshalb auch konventionelle PV-Module Kühlungsvorrichtung aufweisen. (Zahlenangaben entnommen aus: D. Zenhäusern, E. Bamberger, A. Baggenstos, PVT Wrap-Up: Energiesysteme mit Photovoltaisch-Thermischen Solarkollektoren, Schlussbericht v. 31. 03.2017, EnergieSchweiz, 3003 Bern) Photothermie-Module, auch als Hybridkollektoren oder photovoltaisch-thermische (PVT- ) Kollektoren bezeichnet, bei denen Photovoltaik-Zellen mit Wärmetauschern kombiniert sind, verknüpfen die notwendige Kühlung besagter Photovoltaik-Module zur Verbesserung ihres elektrischen Wirkungsgrades auf elegante Weise mit der Solarthermie, also der Energiegewinnung von Wärmeenergie aus dem eingestrahlten Sonnenlicht, und können vorteilhaft zu einer effizienten Energieversorgung von Gebäuden verwendet werden, da die beschriebenen Energieverluste minimiert werden. Voraussetzung für einen effizienten Betrieb derartiger Photothermie-Module ist dabei eine gute Wärmeübertragung vom Photovoltaik-Modul zum Wärmetauscher, was normalerweise durch einen möglichst engen Kontakt zwischen der Kühlmittelleitung des Wärmetauschers und dem Halbleitermaterial des Photovoltaik-Modules versucht wird zu gewährleisten. Aus dem Stand der Technik ist dazu beispielsweise die Herstellung eines stoffschlüssigen Verbunds aus Photovoltaik-Modul-Rückseite und Wärmetauscher bekannt, insbesondere durch Verklebung oder "Anlaminierung", welcher eine relativ gute Wärmeübertragung ermöglicht. Nachteilig an dieser Verbindungsart ist allerdings einerseits, dass eine Reihe vergleichsweise aufwändiger Arbeitsschritte zur Verbindung von Photovoltaik (PV)-Modul und Wärmetauscher ausgeführt werden müssen und andererseits eine irreversible Verbindung zwischen den Baugruppen entsteht, die nur noch schlecht im Rahmen von Wartungs- und Reparaturarbeiten gelöst werden kann. Aufgrund einer unterschiedlichen thermischen Längenausdehnung der Materialien Glas (PV-Modul) und Metall (Wärmetauscher) ist eine stoffschlüssige Verbindung zudem anfällig für eine Beschädigung durch das Auftreten thermisch induzierter mechanischer Spannungen, was insbesondere die Lebensdauer des PV-Moduls nachteilig verringern kann.

Zur Lösung der genannten Probleme wird deshalb nach Möglichkeiten gesucht, beim Bau eines PVT-Moduls eine thermisch gut leitende Verbindung zwischen PV-Modul und Wärmetauscher herzustellen und dabei gleichzeitig auf eine stoffschlüssige Verbindung zu verzichten. Aus der EP 3 190 699 A1 ist in diesem Zusammenhang beispielsweise ein Hybridsolarmodul-Dachmontagesystem bekannt, welches mittels Höhenjustierelementen zwischen einer tragenden Struktur des Gebäudedaches und den Wärmetauschern einen besonders ebenen Montageunterbau schafft, sodass PV-Module auf die vormontierten Wärmetauscher aufgelegt und miteinander verschraubt werden können. Die EP 3 715 745 A1 beschreibt zudem ein Befestigungssystem für ein Hybridsolarmodulsystem mit einer Befestigungseinrichtung am Wärmetauscher in die ein Photovoltaik-Modul über eine Einhängeeinrichtung eingehängt werden kann. Das Eigengewicht des Photovoltaik-Moduls inkl. Einhängeeinrichtung drückt hierbei das PV-Modul an den Wärmetauscher heran und ermöglicht so einen wärmeleitenden Kontakt. Bei besonders ungünstigen Witterungsverhältnissen wie starkem Wind und/oder extrem großem Schneeaufkommen oder Ähnlichem, womit aufgrund des Klimawandels in den nächsten Jahren vermehrt zu rechnen ist, können derartig aufgebaute Hybridsolarmodulsysteme (auch als "Photothermie-Module" bezeichnet) allerdings Schwachstellen bezüglich der PV-Modul/Wärmetauscher-Modul-Verbindung aufweisen, welche in einem günstigeren Fall "nur" zu einer schlechteren Energieeffizienz der Vorrichtung und im schlechtesten Fall zur vollständigen Zerstörung des Hybridsolarmodulsystems führen kann. Aus der DE 10 2018 119 492 A1, der CN 1 07 547 043 A und der WO 2017/001 485 A1 sind zudem Solarmodule mit sog. Wärmeabsorbern bekannt, welche Rohrleitungen zum Transport einer Kühlflüssigkeit aufnehmen können und dadurch einen besseren Wärmeübertrag vom Solarmodul zur Kühlflüssigkeit innerhalb besagter Rohrleitung gewährleisten können. Allgemein im Zusammenhang mit der vorliegenden Erfindung sei auch noch auf die DE 20 2012 012 684 U1 und die DE 10 2018 109 585 A1 hingewiesen.

Der vorliegenden Erfindung liegt hiervon ausgehend die Aufgabe zugrunde, ein gegenüber dem Stand der Technik alternatives und verbessertes Photothermie-Modul bereitzustellen, welches besonders effizient in der Energiegewinnung und dabei robust gegenüber Witterungseinflüssen ist und zudem möglichst einfach und schnell aufgebaut aber auch gewartet und ggf. repariert werden kann.

Diese Aufgabe wird durch ein Photothermie-Modul mit den Merkmalen des unabhängigen Patentanspruchs 1 gelöst.

Das erfindungsgemäße Photothermie-Modul zeichnet sich gegenüber gattungsbildenden Photothermie-Modulen dadurch aus,
- dass der Wärmeabsorber als ein Bauteil mit Sattelprofil ausgestaltet ist, wenigstens umfassend
   - eine Kontaktseite zur Wirkverbindung mit der Unterseite des Photovoltaik-Moduls;
   - eine, der Kontaktseite gegenüberliegende Aufnahmeseite mit einem Aufnahmebereich und zwei den Aufnahmebereich einfassende Flügelbereiche,
   - wobei der Aufnahmebereich sich wenigstens abschnittsweise entlang einer Längsachse des Wärmeabsorbers erstreckt und eingerichtet ist, den Querabschnitt der Rohrleitung aufzunehmen;
   - und wobei die Kontaktseite eingerichtet ist, mit der Unterseite des Photovoltaik-Moduls in unmittelbare oder mittelbare Wirkverbindung zu treten;
      und

- dass das Wärmetauscher-Modul wenigstens ein Niederhalteelement umfasst,
   - wobei das Niederhalteelement im Bereich der Aufnahmeseite des Wärmeabsorbers bezüglich der Unterseite des Photovoltaik-Moduls jenseits der Rohrleitung angeordnet ist;
   - wobei das Niederhalteelement im Bereich der Längsseiten des Photovoltaik-Moduls mit dessen Rahmen in Wirkverbindung steht;
   - wobei das Niederhalteelement die Rohrleitung wenigstens abschnittsweise kontaktiert,
   - und wobei das Niederhalteelement eingerichtet ist, die Rohrleitung samt Wärmeabsorber gegen die Unterseite des Photovoltaik-Moduls zu drücken.

Ein als Bauteil mit einem Sattelprofil ausgebildeter Wärmeabsorber dessen Aufnahmebereich sich wenigstens abschnittsweise entlang einer Längsachse des Wärmeabsorbers erstreckt und eingerichtet ist, den Querabschnitt der Rohrleitung des Wärmetauscher-Moduls aufzunehmen erhöht vorteilhaft die Quersteifigkeit des Photothermie-Moduls in zusammengebautem Zustand. Ein derartiger Wärmeabsorber kann vorteilhaft Last, die von dem Photovoltaik-Modul auf das Wärmetauscher-Modul ausgeübt wird aufnehmen, ohne dass dafür Querträgerprofile und/oder Längsträgerprofile auf einer Unterseite des Wärmetauscher-Moduls angeordnet sein müssen. Dies spart vorteilhaft Bauteile ein, vereinfacht die Montage des Photothermie-Moduls und senkt somit die Montagekosten.

Der als Sattelprofil ausgebildete Wärmeabsorber optimiert zudem die Wärmeübertragung von der Unterseite des Photovoltaik-Moduls zur Rohrleitung, da die Kontaktfläche zwischen Wärmeabsorber und Rohrleitung im Vergleich zu einem ebenen Absorberblech erhöht ist.

Das wenigstens eine Niederhalteelement fixiert vorteilhaft den Wärmeabsorber samt Rohrleitung am Photovoltaik-Modul und bildet so einen statischen Verbund von Glas (des Photovoltaik-Moduls), Wärmeabsorber und Rohrleitung, welcher vorteilhaft höhere Lasten als das Glas eines Photovoltaik-Moduls alleine tragen kann. Zudem verkürzt besagtes Niederhalteelement vorteilhaft die Spannweite des Verbundes von Glas (des Photovoltaik-Moduls), Wärmeabsorber und Rohrleitung in Modul-Querrichtung und verbessert dadurch die Formstabilität des Photothermie-Moduls als Ganzes. Eine Durchbiegung unter Last wird somit weiter vorteilhaft reduziert und die Lebensdauer und die Effizienz der Wärmeleitung vorteilhaft erhöht. Auf Quer- und Längsträger, die sich über die Unterseite des Photothermie-Moduls erstrecken, kann dabei vorteilhaft verzichtet werden. Die Unterseite des Photothermie-Moduls, insbesondere die Unterseite des Wärmetauscher-Moduls, bleibt somit zugänglich für die Anordnung weiterer technischer Geräte, wie bspw. von Junction-Boxen, die für die elektrische Verbindung verschiedener Photovoltaik-Module untereinander sowie zu einem Wechselrichter benötigt werden, oder für die Anordnung von Anschlussstücken für die Rohrleitung oder Ähnliches. Dabei bestehen vorteilhaft im mittleren Bereich der Unterseite des Photothermie-Moduls, also abseits des im Bereich der Längsseiten des Photovoltaik-Moduls angeordneten, wenigstens einen Niederhalteelements, nur geringe geometrische Vorgaben für die Anordnung besagter technischer Geräte an der Unterseite im Gegensatz zu Photothermie-Modulen des Stands der Technik, bei denen durch das Vorsehen von Quer- und/oder Längsträgern an der Unterseite nur noch vorbestimmte, zumeist rechteckige Bereiche der Unterseite frei zugänglich sind.

Weitere vorteilhafte Ausgestaltungen und Weiterbildungen, welche einzeln oder in Kombination miteinander einsetzbar sind, sind Gegenstand der abhängigen Ansprüche.

In einer bevorzugten Ausgestaltung der Erfindung, kann der Aufnahmebereich des Wärmeabsorbers dabei eingerichtet sein, den Querabschnitt der Rohrleitung reversibel zu fixieren. Unter einer "reversiblen Fixierbarkeit" ist hierbei zu verstehen, dass die Rohrleitung ohne weitere technische Hilfsmittel mit dem Aufnahmebereich des Wärmeabsorbers so in Wirkverbindung gebracht werden kann, dass ein unwillkürliches Lösen der Rohrleitung vom Wärmeabsorber, insbesondere von dessen Aufnahmebereich, verhindert wird, ein willkürliches Lösen durch einen Monteur, vorzugsweise ohne Verwendung von Werkzeug, jedoch möglich bleibt.

In einer Ausgestaltung der Erfindung kann der Aufnahmebereich dazu bevorzugt einen gabelförmigen Querschnitt mit zueinander gebogenen Gabelzinken aufweisen, wobei eine Länge der Gabelzinken länger als ein Radius der Rohrleitung ist und wobei die Spitzen der Gabelzinken einen geringeren Abstand zueinander haben als der doppelte Radius der Rohrleitung, sodass die Rohrleitung in den Aufnahmebereich eingerastet werden kann und die Spitzen der Gabelzinken die Rohrleitung dann im Aufnahmebereich reversibel halten. Ein derart ausgestalteter Aufnahmebereich ermöglicht vorteilhaft das Einrasten oder "Einklicken" der Rohrleitung, insbesondere deren Querabschnitte, sowie das Lösen besagter Rohrleitung vom Wärmeabsorber ohne Zuhilfenahme von speziellem Werkzeug. Im eingerasteten bzw. "eingeklickten" Zustand verhindern die Spitzen der Gabelzinken vorteilhaft das unwillkürliche Lösen der Rohrleitung vom Aufnahmebereich, bspw. durch die Einwirkung der Schwerkraft auf die Rohrleitung.

In einer weiteren bevorzugten Ausgestaltung des Photothermie-Moduls hat sich bewährt, wenn das Wärmetauscher-Modul eine Vielzahl von Wärmeabsorbern umfasst, deren Kontaktseiten im zusammengesetzten Zustand des Photothermie-Moduls gemeinsam einen Großteil der Unterseite des Photovoltaik-Moduls, bevorzugt mehr als 90 %, besonders bevorzugt mehr als 95 % der Unterseite des Photovoltaik-Moduls, bedecken. Eine Vielzahl von Wärmeabsorbern erleichtert vorteilhaft die Montage und erhöht zudem die Flexibilität für die Gestaltung der Unterseite des Photothermie-Moduls. Eine Vielzahl von Wärmeabsorbern reduziert ebenso in vorteilhafter Weise die kumulierte Längenausdehnung aufgrund von Temperaturänderung.

In einer weiteren Ausgestaltung hat es sich bewährt, wenn zwischen der Unterseite des Photovoltaik-Moduls und der Kontaktseite des wenigstens einen Wärmeabsorbers ein Stützblech angeordnet ist. Besagtes Stützblech kann vorzugsweise flächendeckend über die gesamte Unterseite des Photovoltaik-Moduls ausgebildet sein und verbindet besagte Unterseite mit der Kontaktseite des wenigstens einen Wärmeabsorbers thermisch-leitend. Das Stützblech kann die Unterseite des Photovoltaik-Moduls darüber hinaus vorteilhaft gleichzeitig abstützen. Die Anordnung eines Stützbleches zwischen der Unterseite des Photovoltaik-Moduls und der Kontaktseite des wenigstens einen Wärmeabsorbers ermöglicht es vorteilhaft den wenigstens einen Wärmeabsorber bzw. die Vielzahl von Wärmeabsorber, die über die Unterseite des Photothermie-Moduls hinweg angeordnet sein können, schmaler auszubilden und dadurch Kosten zu sparen, bei gleichzeitiger Gewährleistung einer ausreichenden Quersteifigkeit des Photothermie-Moduls.

In einer weiteren bevorzugten Ausgestaltung der Erfindung können zwei Niederhalteelemente vorgesehen sein, welche sich entlang der Längsseiten des Rahmens erstrecken;
- wobei das erste Niederhalteelement bevorzugt mit einer ersten Längsseite des Rahmens in deren Bereich nur Längsabschnitte der Rohrleitung angeordnet sind wirkverbindbar ist;
- wobei das zweite Niederhalteelement bevorzugt mit einer zweiten, der ersten Längsseite gegenüber liegenden, Längsseite des Rahmens in deren Bereich sowohl Längsabschnitte als auch ein Rücklaufabschnitt der Rohrleitung angeordnet ist, wirkverbindbar ist;
- und wobei das zweite Niederhalteelemente vorzugsweise soweit in Richtung einer Mittellinie des Wärmetauscher-Moduls in den Bereich oberhalb der Rohrleitung hineinragt, dass es sowohl mit Querabschnitten der Rohrleitung als auch mit einem Rücklaufabschnitt der Rohrleitung wechselwirken kann.

Zwei sich entlang der Längsseiten des Rahmens erstreckende Niederhalteelemente können in zusammengebautem Zustand des Photothermie-Moduls die Rohrleitung samt Wärmeabsorber vorteilhaft dadurch gegen die Unterseite des Photovoltaik-Moduls drücken, dass eine Wechselwirkung mit Rohrleitung ausschließlich im Bereich nahe den Längsseiten des Rahmens erfolgt und der Mittelbereich der Unterseite des Photothermie-Moduls vorteilhaft zugänglich bleibt. Ein in Richtung einer Mittellinie des Wärmetauscher-Moduls in den Bereich oberhalb der Rohrleitung hineinragendes zweites Niederhalteelement ermöglicht vorteilhaft insbesondere die gleichzeitige Kontaktierung von Quer-, Längs- sowie Rücklaufabschnitten der Rohrleitung.

In einer besonders bevorzugten Ausgestaltung der Erfindung kann das wenigstens eine Niederhalteelement als ein Bauteil mit einer Längsseite und einer Querseite ausgebildet sein, wobei die Länge der Längsseite des Niederhalteelements wenigstens 90 % der Länge der Längsseite des Wärmetauscher-Moduls, bevorzugt wenigstens 95 % der Länge der Längsseite des Wärmetauscher-Moduls, besonders bevorzugt 100 % der Länge der Längsseite des Wärmetauscher-Moduls beträgt.

Ein Niederhalteelement, welches sich entlang der Längsseite des Rahmens und somit auch entlang der Längsseite des Wärmetauscher-Moduls erstreckt, und dessen Längsseite einen Großteil der Länge der Längsseite besagten Wärmetauscher-Moduls, nämlich wenigstens 90 % der Länge der Längsseite des Wärmetauscher-Moduls, bevorzugt wenigstens 95 % der Länge der Längsseite des Wärmetauscher-Moduls, besonders bevorzugt 100 % der Länge der Längsseite des Wärmetauscher-Moduls beträgt, verbessert vorteilhaft die Längssteifigkeit des Photothermie-Moduls. Bei Einwirkung von Wind- und/oder Schneelasten auf besagtes Photothermie-Modul kann dadurch, ergänzend zum längsseitigen Rahmen, die Durchbiegung des Photothermie-Moduls in Längsrichtung vorteilhaft reduziert werden.

Zudem ist es von Vorteil, wenn das wenigstens eine Niederhalteelement als ein einstückiges Bauteil ausgebildet ist. Einstückige Bauteile lassen sich vorteilhaft insbesondere durch Verfahren wie das Strangpressen (Extrusion) effizient herstellen und als Ganzes schnell und einfach verbauen.

In einer weiteren besonders bevorzugten Ausgestaltung der Erfindung kann das wenigstens eine Niederhalteelement zur Kontaktierung der Rohrleitung wenigstens einen ersten Arm und wenigstens einen zweiten Arm aufweisen, wobei der erste Arm soweit in Richtung einer Mittellinie des Wärmetauscher-Moduls in den Bereich oberhalb der Rohrleitung hineinragt, dass der erste Arm sowohl mit Querabschnitten der Rohrleitung als auch mit einem Rücklaufabschnitt der Rohrleitung wechselwirkt; und wobei der zweite Arm gerade oder gebogen, insbesondere zur Rohrleitung hin gebogen, ausgebildet ist und soweit in Richtung einer Mittellinie des Wärmetauscher-Moduls in den Bereich oberhalb der Rohrleitung hineinragt, dass der zweite Arm ausschließlich mit Querabschnitten der Rohrleitung wechselwirkt.

Neben der Fixierung der Rohrleitung an der Unterseite des Photovoltaik-Moduls und Bildung eines statischen Verbundes wie zuvor beschrieben, ermöglicht ein derart ausgestaltetes Niederhalteelement eine Stützung der Rohrleitung durch den zweiten Arm im Querabschnitt, also in einem geraden Abschnitt der Rohrleitung, und nicht in einem der überwiegend gebogen ausgestalteten Längsabschnitte. Insbesondere die gebogene Ausgestaltung des zweiten Arms ermöglicht dabei eine elastische Stützung der Rohrleitung bzw. der Wärmeabsorber und der Rohrleitung, was vorteilhaft das Auftreten einer gegenläufigen Durchbiegung in Querrichtung minimiert und dadurch die Lebensdauer des Photothermie-Moduls, insbesondere dessen Photovoltaik-Moduls, vorteilhaft erhöht.

Darüber hinaus ist es von Vorteil, wenn entlang der Längsseiten des Photovoltaik-Moduls bevorzugt im Bereich der Längsabschnitte der Rohrleitung zwischen der Rohrleitung und der Unterseite des Photovoltaik-Moduls jeweils wenigstens ein Randblech angeordnet ist. Randbleche stützen vorteilhaft insbesondere die Längsabschnitte und/oder den Rücklaufabschnitt der Rohrleitung ab, da besagte Abschnitte aufgrund der Aufnahme der Rohrleitung durch den oder die Aufnahmebereiche des oder der Wärmabsorber bezüglich der Unterseite des Photovoltaik-Moduls erhöht angeordnet sind. Die Randbleche gleichen diesen Höhenunterschied vorteilhaft aus und können so insbesondere ein Verbiegen der Längsabschnitte und/oder des Rücklaufabschnitts der Rohrleitung verhindern.

Zudem hat sich eine Ausgestaltung des Photothermie-Moduls bewährt, bei der der Wärmeabsorber, insbesondere dessen Flügelbereiche, wenigstens eine Wärmeleitlamelle, bevorzugt mehrere Wärmeleitlamellen, zur weiteren Abführung von Wärme vom Photovoltaik-Modul an die Umgebung umfasst.

Der Abstand zwischen den Wärmeleitlamellen kann dabei insbesondere in einem Bereich zwischen 10 und 25 mm, bevorzugt bei 17 mm, liegt und/oder wobei Wärmeleitlamellen nahe dem Aufnahmebereich eine größere Höhe aufweisen als Wärmeleitlamellen im Flügelbereich, insbesondere nahe einer Längskante des Wärmeabsorbers. Eine effektive Abführung der Wärme vom Photovoltaik-Modul erhöht vorteilhaft dessen Leistung. Die Wärmeleitlamellen stellen hierbei vorteilhaft eine passive Kühlvorrichtung dar, die keine beweglichen Teile umfasst und keine eigene Stromversorgung benötigt. Eine passive Kühlvorrichtung ist vorteilhaft besonders energieeffizient und leise. Diese Bauart erlaubt auch vorteilhaft den Einsatz als Luft/Wasser-Wärmetauscher quellenseitig für eine Wärmepumpe ohne Sonneneinstrahlung und unter Umgebungstemperatur. Weisen die Wärmeleitlamellen nahe dem Aufnahmebereich eine größere Höhe als die Wärmeleitlamellen, welche im Flügelbereich, insbesondere diejenigen nahe einer Längskante angeordnet sind, auf, verbessert dies zum einen vorteilhaft die Stapelbarkeit der einzelnen Photothermie-Module und vereinfacht dadurch deren Transport, zum anderen wird die "Modul-Infrastruktur", als verschiedene Kabel und Anschlüsse an der Unterseite des Photothermie-Moduls besser zugänglich. Schließlich spart eine derartige Ausgestaltung des Wärmeabsorbers auch Material ein, was vorteilhaft nicht nur zu einer Gewichtsreduktion, sondern auch zu einer Kostenreduktion dieses Bauteils führt.

Hierbei ist es darüber hinaus von Vorteil, wenn eine maximale Höhe der Wärmeleitlamelle oder Wärmeleitlamellen kleiner oder gleich einer Höhe der dem Aufnahmebereich abgewandten Seite der Rohrleitung über der Aufnahmeseite ist. Ist die maximale Höhe der Wärmeleitlamelle bzw. -lamellen kleiner oder gleich der Höhe der dem Aufnahmebereich abgewandten Seite der Rohrleitung über der Aufnahmeseite, mit anderen Worten überragt keine der Wärmeleitlamellen die Rohrleitung nach außen (also von der Unterseite des Photovoltaik-Moduls weg), können das oder die Niederhalteelemente, insbesondere Niederhalteelemente, deren Länge der Längsseite wenigstens 90 % der Länge der Längsseite des Wärmetauscher-Moduls, bevorzugt wenigstens 95 % der Länge der Längsseite des Wärmetauscher-Moduls, besonders bevorzugt 100 % der Länge der Längsseite des Wärmetauscher-Moduls beträgt, die Rohrleitung vorteilhaft an beliebigen Punkten und/oder an beliebigen längeren Abschnitten kontaktieren und sie samt Wärmeabsorber gegen die Unterseite des Photovoltaik-Moduls drücken.

In einer weiteren Ausgestaltung der Erfindung hat es sich bewährt, wenn für einen jeden Wärmeabsorber wenigstens ein Niederhalteelement vorgesehen ist, welches sowohl mit der Rohrleitung, insbesondere deren Quer- und/oder Längsabschnitten, als auch mit wenigstens einer Wärmeleitlamelle wirkverbindbar ist. Ein derartiges Niederhaltelement kann insbesondere an einer Wärmeleitlamelle oder zwischen zwei benachbarten Wärmeleitlamellen angeordnet sein und die Rohrleitung samt Wärmeabsorber gegen die Unterseite des Photovoltaik-Moduls zu drücken.

Alternativ dazu können in einer Ausgestaltung des Photothermie-Moduls auch für einen jeden Wärmeabsorber zwei Niederhalteelemente vorgesehen sein, welche sowohl mit der Rohrleitung als auch mit wenigstens einer Wärmeleitlamelle wirkverbindbar sind;
- wobei das erste Niederhalteelement bevorzugt mit einer ersten Längsseite des Rahmens, in dessen Bereich nur Längsabschnitte der Rohrleitung angeordnet sind, wirkverbindbar ist;
- wobei das zweite Niederhalteelement bevorzugt mit einer zweiten, der ersten Längsseite gegenüber liegenden, Längsseite des Rahmens in dessen Bereich sowohl Längsabschnitte als auch ein Rücklaufabschnitt der Rohrleitung angeordnet ist, wirkverbindbar ist;
- und wobei das zweite Niederhalteelemente vorzugsweise soweit in Richtung einer Mittellinie des Wärmetauscher-Moduls in den Bereich oberhalb der Rohrleitung hineinragt, dass es sowohl mit Querabschnitten der Rohrleitung als auch mit einem Rücklaufabschnitt der Rohrleitung wechselwirken kann.

Zwei, für einen jeden Wärmeabsorber vorgesehene, Niederhalteelemente können in zusammengebautem Zustand des Photothermie-Moduls die Rohrleitung samt Wärmeabsorber vorteilhaft dadurch gegen die Unterseite des Photovoltaik-Moduls drücken, dass eine Wechselwirkung mit Rohrleitung ausschließlich im Bereich nahe den Längsseiten des Rahmens erfolgt und der Mittelbereich der Unterseite des Photothermie-Moduls vorteilhaft zugänglich bleibt. Das Vorsehen von individuellen Niederhalteelementen für einen jeden Wärmeabsorber ermöglicht insbesondere die Anordnung an einer, bevorzugt zwischen zwei benachbarten, Wärmeleitlamellen, sodass vorteilhaft eine gezielte Kontaktierung der Rohrleitung auch im Fall der Ausgestaltung des Wärmeabsorbers mit Wärmeleitlamellen gewährleistet ist. Ein in Richtung einer Mittellinie des Wärmetauscher-Moduls in den Bereich oberhalb der Rohrleitung hineinragendes zweites Niederhalteelement ermöglicht vorteilhaft insbesondere die gleichzeitige Kontaktierung von Quer-, Längs- sowie Rücklaufabschnitten der Rohrleitung.

Dabei hat es sich darüber hinaus bewährt, wenn wenigstens ein Befestigungselement, welches oberhalb der Rohrleitung, insbesondere oberhalb ihres Querabschnitts, in einer Lücke zwischen dem ersten Niederhalteelement und dem zweiten Niederhalteelement reversibel anordenbar und eingerichtet ist, ein Verschieben des ersten und zweiten Niederhalteelements entlang der Längsachse des Wärmeabsorbers zu verhindern. Ein derartiges Befestigungselement, welches vorteilhaft beim Zusammenbau des Photothermie-Moduls vorzugsweise nachdem das erste und zweite Niederhaltelement am Wärmeabsorber angeordnet und mit dem Rahmen des Photothermie-Moduls wirkverbunden wurden, in der Lücke zwischen besagten Niederhalteelemente eingeklemmt bzw. von oben eingeklickt werden kann, erhöht vorteilhaft die Stabilität der Anordnung der Niederhalteelemente eines jeden Wärmeabsorbers.

Schließlich kann in einer weiteren bevorzugten Ausgestaltung das Niederhalteelement oder können die Niederhalteelemente auch wenigstens eine Wärmeleitlamelle, bevorzugt drei Wärmeleitlamellen, zur weiteren Abführung von Wärme von der Rohrleitung an die Umgebung umfassen. Wärmeleitlamellen am Niederhalteelement erhöhen vorteilhaft dessen Oberfläche und somit die Möglichkeit der Wärmeübertragung an die Umgebung. Umfasst das jeweilige Niederhaltelement mehrere Wärmeleitlamellen, vorzugsweise drei Wärmeleitlamellen, können diese an der, der Rohrleitung abgewandten Seite des jeweiligen Niederhalteelements derart angeordnet sein, dass sich eine Art "Fächerprofil" bilden. Dabei können die außenliegenden Wärmeleitlamellen bevorzugt abgewinkelt angeordnet sein und vorteilhaft neben ihrer Wärmeabfiihrwirkung auch mit Fixiermitteln zusammenwirken, welche vorzugsweise an den Wärmeleitlamellen des Wärmeabsorbers angeordnet sind.

Das erfindungsgemäße Photothermie-Modul weist insbesondere durch die Bauart des Wärmetauscher-Moduls vorteilhaft eine hohe Eigen-Quersteifigkeit auf, ohne dass dazu Quer- und/oder Längsträger vorgesehen sein müssten. Das oder die erfindungsgemäßen, sich entlang der Längsseiten des Photothermie-Moduls erstreckenden Niederhalteelemente erhöhen darüber hinaus auch vorteilhaft die Längssteifigkeit. Die Unterseite des Photothermie-Moduls bleibt dabei größtenteils zugänglich und kann so leicht gewartet bzw. technisch umgerüstet werden. Die Bauart des Wärmetauscher-Moduls ermöglicht zudem auch bei der Erstherstellung eine hohe Flexibilität in der Ausgestaltung der Modul-Unterseite, da unterschiedlichen Anordnungen von technischem Gerät, bspw. den Junction-Boxen, lediglich durch eine unterschiedliche Positionierung von Aussparungen in den Wärmeabsorbern Rechnung getragen werden kann. Das erfindungsgemäße Photothermie-Modul arbeitet zudem besonders energieeffizient und ist kostengünstig herzustellen. Auch bietet diese Konstruktionsart vorteilhaft genug Platz für die thermische Vor- und Rücklaufverrohrung sowie um Modul-Optimizer oder Mikro-Wechselrichter zu montieren.

Zusätzliche Einzelheiten und weitere Vorteile der Erfindung werden nachfolgend an Hand bevorzugter Ausführungsbeispiele, auf welche die vorliegende Erfindung jedoch nicht beschränkt ist, und in Verbindung mit den beigefügten Zeichnungen beschrieben.

Darin zeigen schematisch:
- Fig. 1: eine Ausgestaltung eines erfindungsgemäßen Photothermie-Moduls mit Blick auf dessen Unterseite;
- Fig. 2: die Ausgestaltung des Photothermie-Moduls aus Fig. 1, wobei die Niederhalteelemente in der Figur weggelassen wurden, sodass alle Bereiche der Rohrleitung dieser Ausgestaltung sichtbar sind;
- Fig. 3: eine Ansicht ähnlich der in Fig. 2 einer weiteren Ausgestaltung des Photothermie-Moduls mit einer alternativen Führung der Rohrleitung im Bereich der Anschlussstücke;
- Fig. 4: einen Schnitt durch eine weitere Ausgestaltung eines erfindungsgemäßen Photothermie-Moduls mit Blick auf eine Querseite des Photovoltaik- bzw. des Wärmetauscher-Moduls und somit auch auf eine Querseite des Photothermie-Moduls;
- Fig. 5: einen Schnitt durch einen Ausschnitt einer weiteren Ausgestaltung eines erfindungsgemäßen Photothermie-Moduls wiederum mit Blick auf eine Querseite entsprechend Fig. 3;
- Fig. 6: in einer Schnittansicht quer zu einer Längsachse eines Wärmeabsorbers eine erste Ausgestaltung eines erfindungsgemäßen Wärmeabsorbers;
- Fig. 6a: in einer Schnittansicht quer zu einer Längsachse eines Wärmeabsorbers eine zweite Ausgestaltung eines erfindungsgemäßen Wärmeabsorbers;
- Fig. 7: in einer Schnittansicht quer zu einer Längsachse eines Wärmeabsorbers eine dritte Ausgestaltung eines erfindungsgemäßen Wärmeabsorbers;
- Fig. 8: in einer Schnittansicht quer zu einer Längsachse eines Wärmeabsorbers eine vierte Ausgestaltung eines erfindungsgemäßen Wärmeabsorbers mit einer weiteren Ausgestaltung eines Niederhaltelements;
- Fig. 9: einen Ausschnitt einer Ansicht der Unterseite einer weiteren Ausgestaltung der Erfindung mit einer Vielzahl von Wärmeabsorbern in einer Ausgestaltung wie in den Fig. 7 und 8 gezeigt;
- Fig. 10: einen Ausschnitt wie in Fig. 9 mit länger ausgestalteten ersten und zweiten Niederhalteelementen; und
- Fig. 11: einen Ausschnitt einer Unterseite einer weiteren Ausgestaltung der Erfindung bei der die Wärmeabsorber (21) entlang ihrer Längsachse (213) verkürzt ausgebildet sind.

Bei der nachfolgenden Beschreibung bevorzugter Ausführungsformen der vorliegenden Erfindung bezeichnen gleiche Bezugszeichen gleiche oder vergleichbare Komponenten.

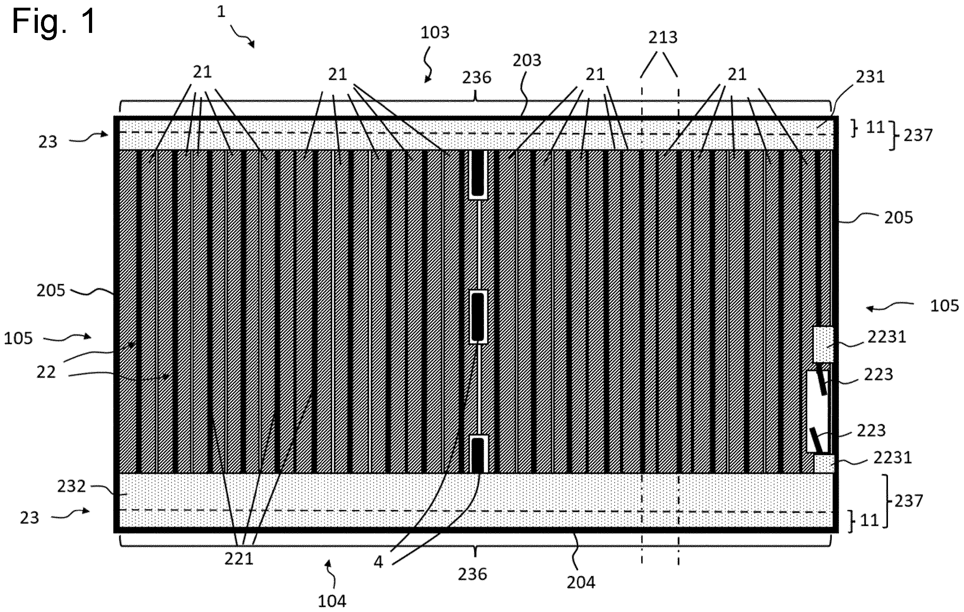

**Fig. 1** zeigt eine Ausgestaltung eines erfindungsgemäßen Photothermie-Moduls 1 mit Blick auf dessen Unterseite US.

Ein erfindungsgemäßes Photothermie-Modul 1 umfasst wenigstens ein Photovoltaik-Modul 10 mit einer Oberseite 101, einer Unterseite 102 und einem entlang von Längsseiten 103 und 104 und/oder Querseiten 105 des Photovoltaik-Moduls 10 verlaufenden Rahmen 11 sowie wenigstens ein Wärmetauscher-Modul 20 mit Längsseiten 203 bzw. 204 und Querseiten 205. Das Wärmetauscher-Modul 20 umfasst dabei wenigstens einen Wärmeabsorber 21 zum Wärmeaustausch mit dem Photovoltaik-Modul 10 und wenigstens eine mit dem Wärmeabsorber 21 wirkverbundene Rohrleitung 22 zur Aufnahme von Wärmeenergie vom Wärmeabsorber 21 und Leitung eines Wärmetauschermediums. Die Rohrleitung 22 kann insbesondere über Anschlussstücke 223 (in Fig. 1 beispielhaft rechts im Bereich des Rahmens 11 eingezeichnet) mit einem Kreislauf für das Wärmetauschermedium verbunden sein, wobei die Anschlussstücke 223 zur Fixierung vorzugsweise über eigene Niederhalteelement 2231 gegen die Unterseite 102 des Photovoltaik-Moduls 10 gedrückt werden können. Als Wärmetauschermedium kann insbesondere ein Wasser-Glykolgemisch, vorzugsweise ein Gemisch aus demineralisiertem, Chloridionen-freien Wasser und Propan-1,2-diol, mit einem Glykolgewichtsanteil von 33 - 43 Gew.-% Verwendung finden. Der wenigstens eine Wärmeabsorber 21 kann vorzugsweise aus einem thermisch leitfähigen Material, insbesondere aus einem metallischen Material wie Kupfer, Aluminium oder Edelstahl, gebildet sein, wodurch vorteilhaft eine gute Wärmeaufnahme von der Unterseite 102 des Photovoltaik-Moduls 10 durch den Wärmeabsorber 21, sowie eine gute Wärmeübertragung vom Wärmeabsorber 21, insbesondere dessen Aufnahmebereich 2121, auf das sich innerhalb der Rohrleitung 22 bewegende Wärmetauschermedium gewährleistet wird. Darüber hinaus kann der Wärmeabsorber 21 Aussparungen für die Anordnung weiterer Bauteile auf der Unterseite 102 des Photovoltaik-Moduls 10, insbesondere für die Anordnung von Junction-Boxen 4 und/oder besagter Anschlussstücke 223 der Rohrleitung 22 umfassen.

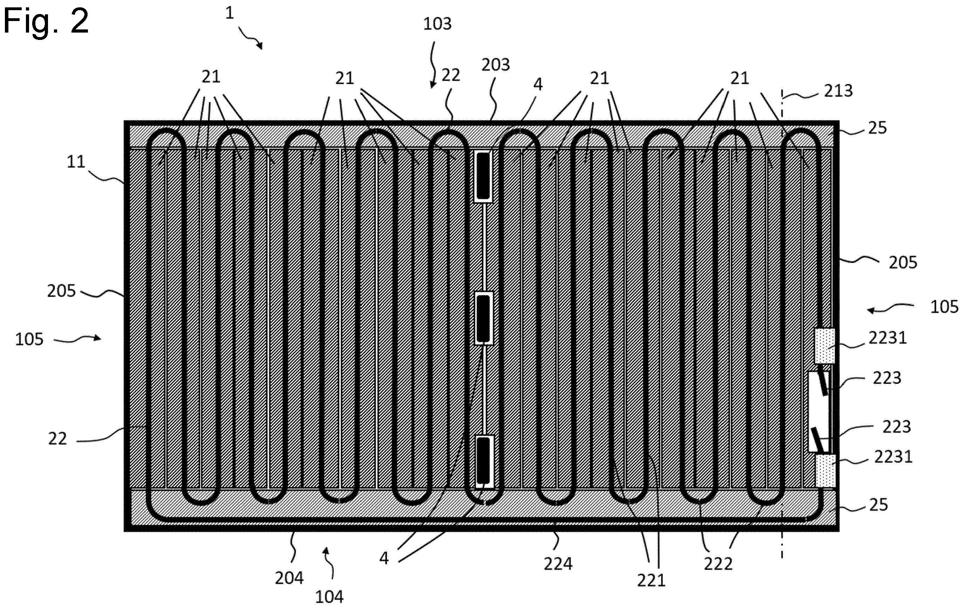

**Fig. 2** zeigt die Ausgestaltung des Photothermie-Moduls 1 aus Fig. 1, wobei die Niederhalteelemente 23 in der Figur weggelassen wurden, sodass alle Bereiche der Rohrleitung 22 dieser Ausgestaltung sichtbar sind.

Wie in Fig. 2 zu sehen, umfasst die Rohrleitung 22 wenigstens einen Querabschnitt 221, der parallel zu den Querseiten 205 des Wärmetauscher-Moduls 20 verläuft und wenigstens einen Längsabschnitt 222, der entlang der Längsseiten 203 und 204 des Wärmetauscher-Moduls 20 verläuft. Die Ausrichtung der Rohrleitung 22, also der dominierende (längste) Teil der Rohrleitung 22 wird dabei vorzugsweise durch die Querabschnitte 221 gebildet. In der in Fig. 2 gezeigten Ausgestaltung sind beispielsweise zwanzig Querabschnitte 221 und neunzehn Längsabschnitte 222 der Rohrleitung 22 dargestellt. Die Längsabschnitte 222 sind in Fig. 2 als Kreisbögen dargestellt, wobei der Radius des jeweiligen Kreisbogens den Abstand zwischen den damit verbundenen Querabschnitten 221 bestimmt. Bei einem Kreisbogenradius (Biegeradius Achse) von insbesondere 46,75 mm ergibt sich beispielsweise ein Abstand (Achsmaß) von 93,5 mm zwischen den damit verbundenen Querabschnitten 221. Das Wärmetauscher-Modul 20 kann auch, wie zu sehen, vorzugsweise eine Vielzahl von Wärmeabsorbern 21 umfassen, deren Kontaktseiten 212 im zusammengesetzten Zustand des Photothermie-Moduls 1 gemeinsam einen Großteil der Unterseite 102 des Photovoltaik-Moduls 10 bedecken können. Entlang der Längsseiten 103 und 104 des Photovoltaik-Moduls 10 können zudem im Bereich der Längsabschnitte 222 der Rohrleitung 22 zwischen der Rohrleitung 22 und der Unterseite 102 des Photovoltaik-Moduls 10 jeweils wenigstens ein Randblech 25 angeordnet sein. In Fig. 2 sind beispielsweise zwei Randbleche 25 gezeigt, eines entlang der ersten Längsseite 103 und eines entlang der zweiten Längsseite 104. Besagte Randbleche 25 können einen Abstand zwischen der Unterseite 102 des Photovoltaik-Moduls 10 und der Rohrleitung 22, insbesondere deren Längsabschnitte 222, ausgleichen und so ein Verbiegen der Rohrleitung 22 vorteilhaft verhindern.

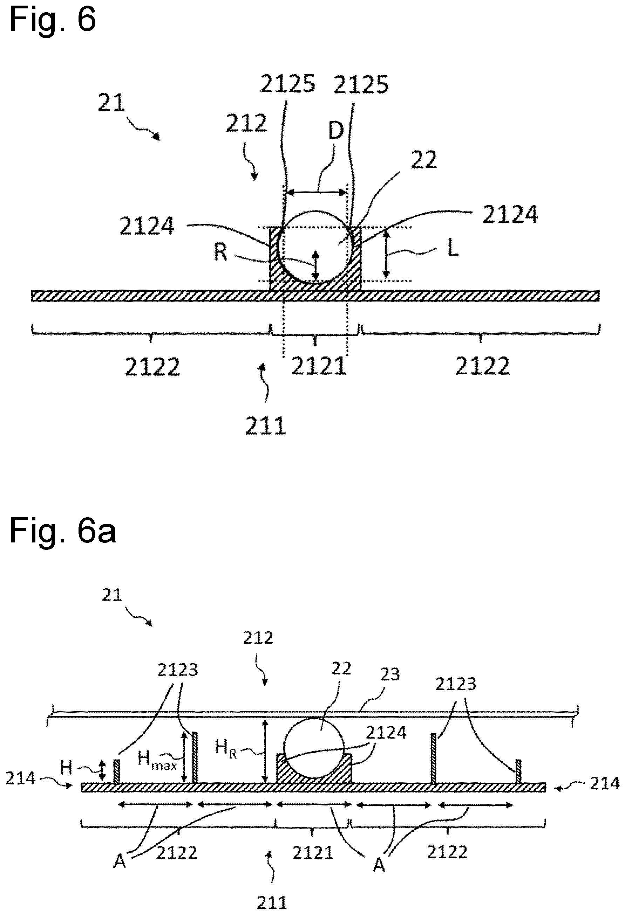

Der Wärmeabsorber 21 ist erfindungsgemäß als ein Bauteil mit Sattelprofil ausgestaltet (vgl. hierzu auch Fig. 6 bis 8), wobei er wenigstens eine Kontaktseite 211 zur Wirkverbindung mit der Unterseite 102 des Photovoltaik-Moduls 10 und eine, der Kontaktseite 211 gegenüberliegende Aufnahmeseite 212 mit einem Aufnahmebereich 2121 und zwei, den Aufnahmebereich 2121 einfassende Flügelbereiche 2122 umfasst. Der Aufnahmebereich 2121 erstreckt sich wenigstens abschnittsweise entlang einer Längsachse 213 des Wärmeabsorbers 21 und ist eingerichtet, den Querabschnitt 221 der Rohrleitung 22 aufzunehmen. Die Kontaktseite 211 des Wärmeabsorbers 21 ist wiederum dazu eingerichtet, mit der Unterseite 102 des Photovoltaik-Moduls 10 in unmittelbare oder mittelbare Wirkverbindung zu treten. Dazu kann die Kontaktseite 211 bevorzugt eben ausgebildet sein, sodass sich im zusammengebauten Zustand des Photothermie-Moduls 1 - insbesondere zur Ausbildung einer unmittelbaren Wirkverbindung - zwischen der Kontaktseite 211 des Wärmeabsorbers 21 und der Unterseite 102 kein Zwischenraum ergibt, sondern beide Bauteile plan aneinander angeordnet sind. Zur weiteren Verstärkung des Kontaktes zwischen der Kontaktseite 211 und der Unterseite 102 des Photovoltaik-Moduls 10 kann der Wärmeabsorber 21 entlang seiner Längsachse 213 zudem, im nicht eingebauten Zustand, leicht gebogen ausgestaltet sein, und zwar insbesondere derart, dass die bezüglich der Längsachse 213 einander gegenüberliegenden Enden des Wärmeabsorbers 21 leicht zum Aufnahmebereich 2121 gebogen sind. Dadurch kann die Kontaktseite 211 im nicht zusammengebauten Zustand des Photothermie-Moduls 1 vorteilhaft eine leicht konvexe Form aufweisen. Bei der Befestigung eines derartig geformten Wärmeabsorbers 21 mittels der Niederhaltelemente 23; 231; bzw. 232 wird dann vorteilhaft insbesondere im mittleren Bereich des Wärmeabsorbers 21, also fern der bezüglich der Längsachse 213 einander gegenüberliegenden Enden, ein Anpressdruck erzeugt werden. Eine entsprechende vorgebogene Form kann auch für die Querabschnitte 221 der Rohrleitung 22 vorgesehen werden.

Zur Ausbildung einer mittelbaren Wirkverbindung kann zwischen der Unterseite 102 des Photovoltaik-Moduls 10 und der Kontaktseite 211 des wenigstens einen Wärmeabsorbers 21 vorzugsweise ein Stützblech 24 angeordnet sein, welches sich bevorzugt über die gesamte Unterseite 102 des Photovoltaik-Moduls 10 erstreckt und besagte Unterseite ebenfalls plan, also ohne Zwischenraum, berührt. Die Kontaktseite 211 des Wärmeabsorbers 21 ist in diesem Fall ebenfalls vorzugsweise eben ausgebildet, um die Auflagefläche zwischen Stützblech 24 und Kontaktseite 211 zu maximieren und so eine möglichst gute Wärmeübertragung sicher zu stellen. Sowohl mit also auch ohne Stützblech 24 kann zur Verbesserung des Wärmeübergangs zwischen der Unterseite 102 des Photovoltaik-Moduls 10 und der Kontaktseite 211 des Wärmeabsorbers 21 zudem vollflächig eine pastöse Wärmeleitpaste, ein "Gapfiller" oder ein, vorzugsweise auf Silikon basierender, Dichtstoff vorgesehen sein. Besagte Materialien dienen dabei insbesondere dem Ausgleich noch vorhandener kleiner Unebenheiten der Kontaktseite 211 des Wärmeabsorbers 21.

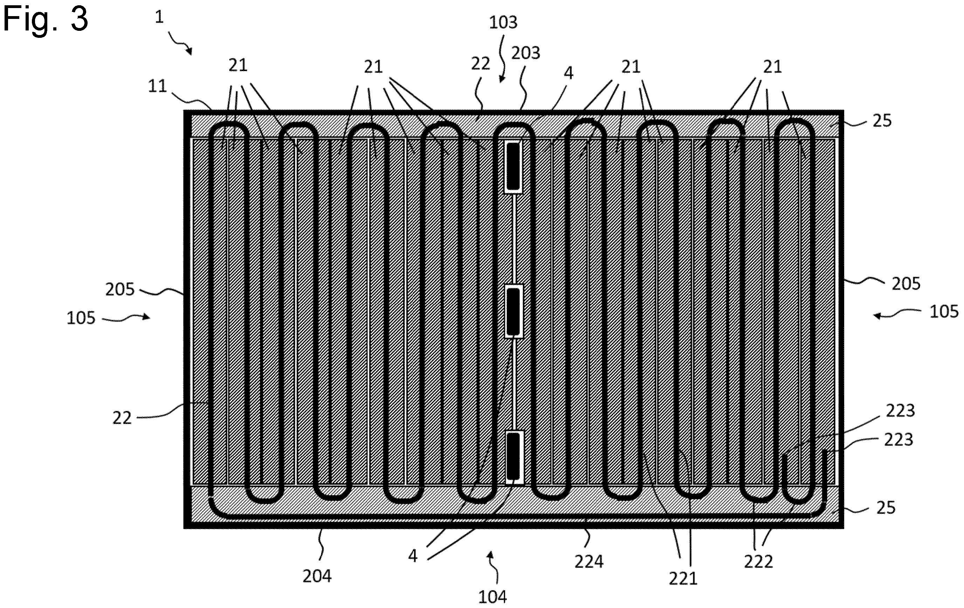

**Fig. 3** zeigt eine Ansicht ähnlich der in Fig. 2 einer weiteren Ausgestaltung des Photothermie-Moduls 1 mit einer alternativen Führung der Rohrleitung 22 im Bereich der Anschlussstücke 223.

Auf der rechten Seite der Fig. 3 ist eine alternative Führung der Rohrleitung 22 zu sehen, bei der der letzte Querabschnitt 221 nicht "direkt" in ein Anschlussstück 223 übergeht, sondern einen weiteren Bogen, also einen weiteren Längsabschnitt 222, ausbildet bevor dann der Übergang zu einem Anschlussstück 223 folgt. Die Führung des Rücklaufabschnitts 224 kann wie in Fig. 2 verlaufen. Eine derartige Führung der Rohrleitung 22 ermöglicht vorteilhaft die Einsparung der Niederhalteelemente 2231 für die Anschlusstücke 223 und erlaubt vorteilhaft einen durchgehenden Wärmeabsorber 21 in diesem Bereich, was die mit Wärmeabsorbern 21 belegte Fläche der Unterseite US erhöht und damit den Wärmeübergang verbessert. Zudem werden vorteilhaft weniger Arbeitsschritte zum Aufbau benötigt.

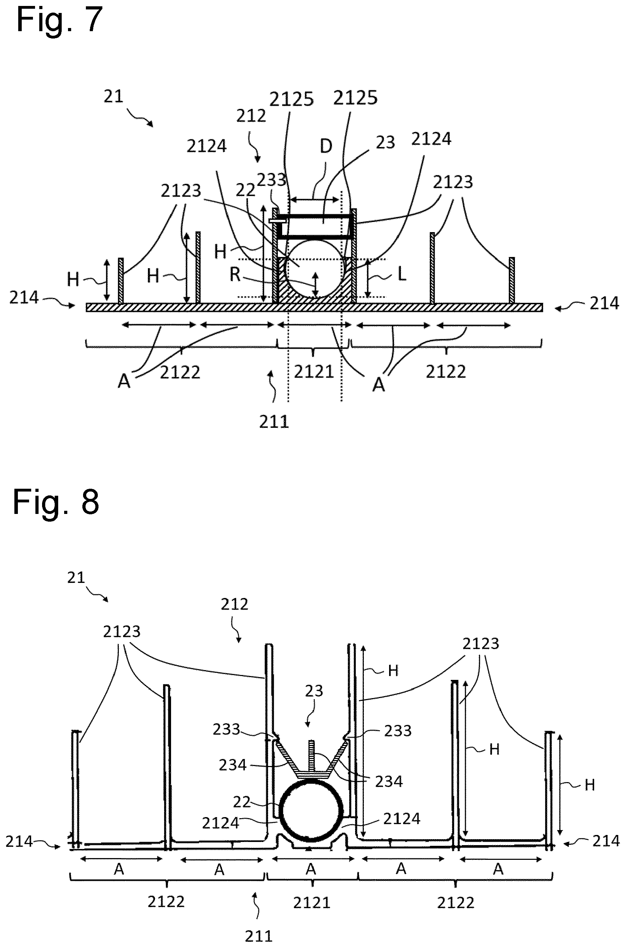

Die Längsabschnitte 222 der Rohrleitung 22 sind hier, anders als in Fig. 2, nicht als Kreisbögen ausgestaltet, sondern weisen - bis auf den hier gezeigten letzten Bogen an den Anschlusstücken 223 - auch kurze gerade, parallel zur jeweiligen Längsseite 103 oder 104 verlaufende, Abschnitte auf. Dadurch können vorteilhaft besonders lange Wärmeleitlamellen 2123 am Wärmeabsorber angeordnet werden (vgl. hierzu auch die Beschreibung zu Fig. 7).

Alle nachfolgend beschriebenen Ausführungsformen der Erfindung können sowohl mit der Führung der Rohrleitung 22 aus Fig. 2 als auch mit der aus Fig. 3 realisiert werden. Weitere Abwandlungen der Rohrleitungsführung sind ebenfalls möglich.

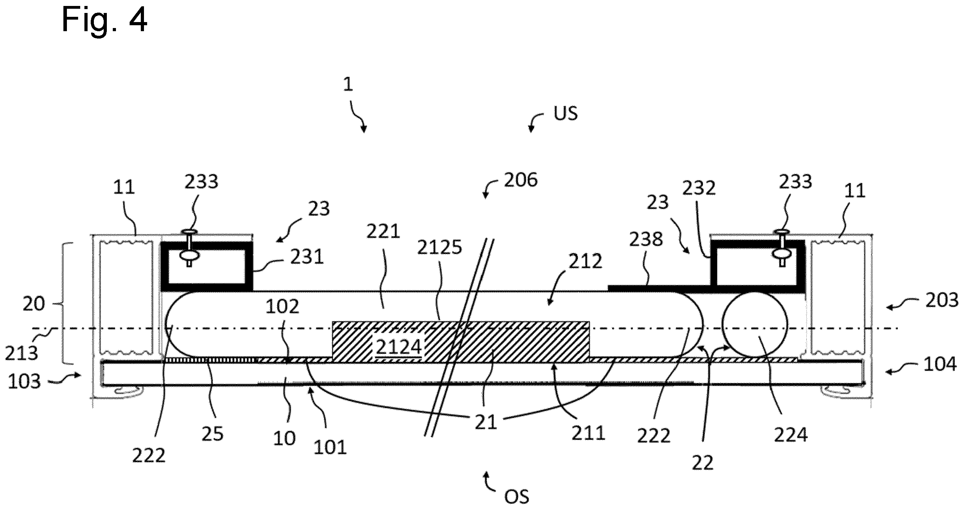

In **Fig. 4** ist ein Schnitt durch eine weitere Ausgestaltung eines erfindungsgemäßen Photothermie-Moduls 1 mit Blick auf eine Querseite 105 des Photovoltaik- 10 bzw. des Wärmetauscher-Moduls 20 und somit auch auf eine Querseite des Photothermie-Moduls 1 gezeigt.

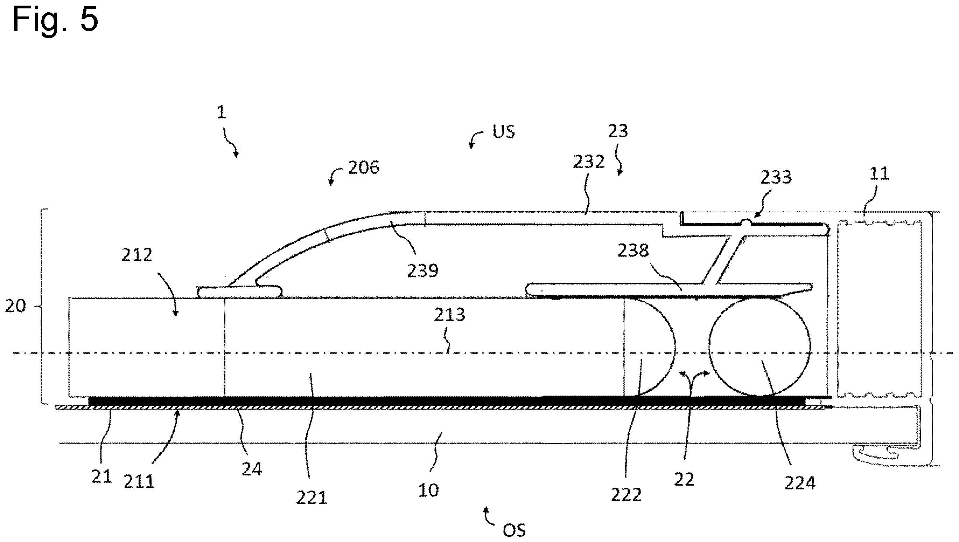

Erfindungsgemäß umfasst das Wärmetauscher-Modul 20, wie insbesondere in den Fig. 4 und 5 dargestellt, zudem wenigstens ein Niederhalteelement 23; 231 bzw. 232. Das Niederhalteelement 23; 231 bzw.232 ist im Bereich der Aufnahmeseite 212 des Wärmeabsorbers 21 bezüglich der Unterseite 102 des Photovoltaik-Moduls 10 jenseits der Rohrleitung 22 angeordnet und steht im Bereich der Längsseiten 103 und 104 des Photovoltaik-Moduls 10 mit dessen Rahmen 11 in Wirkverbindung. Das Niederhalteelement 23; 231 bzw. 232 kontaktiert die Rohrleitung 22 wenigstens abschnittsweise und ist dabei dazu eingerichtet, besagte Rohrleitung 22 samt Wärmeabsorber 21 gegen die Unterseite 102 des Photovoltaik-Moduls 10 zu drücken. Das Niederhalteelement 23; 231 bzw.232 kann dabei vorzugsweise mittels Fixiermitteln 233, insbesondere mittels Nieten, Schrauben oder Ähnlichem, mit dem Rahmen 11 des Photovoltaik-Moduls 10 verbunden sein. Alternativ dazu können besagte Fixiermittel 233 auch als ein Einrastmechanismus ausgestaltet sein (vgl. hierzu Fig. 5).

Wie in Fig. 4 gezeigt, können insbesondere zwei Niederhalteelemente 231 und 232 vorgesehen sein; welche sich entlang der Längsseiten 103 und 104 des Rahmens 11 erstrecken. Das erste Niederhalteelement 231 kann dabei mit einer ersten Längsseite 103 des Rahmens 11, in deren Bereich nur Längsabschnitte 222 der Rohrleitung 22 angeordnet sind, wirkverbindbar sein und kann, wie in Fig. 4 dargestellt, einen rechteckigen Querschnitt aufweisen. Das zweite Niederhalteelement 232 kann entsprechend mit einer zweiten 104, der ersten Längsseite 103 gegenüber liegenden, Längsseite des Rahmens 11 in deren Bereich sowohl Längsabschnitte 222 als auch ein Rücklaufabschnitt 224 der Rohrleitung 22 angeordnet sind, wirkverbindbar sein; wobei das zweite Niederhalteelemente 232 vorzugsweise soweit in Richtung einer Mittellinie des Wärmetauscher-Moduls 20 in den Bereich oberhalb der Rohrleitung 22 hineinragt, dass es sowohl mit Querabschnitten 221 der Rohrleitung 22 als auch mit einem Rücklaufabschnitt 224 der Rohrleitung 22 wechselwirken kann. In Fig. 4 weist dieses zweite Niederhalteelement 232 beispielsweise einen näherungsweise P-förmigen Querschnitt auf, wobei der Fuß des "P" in Richtung der Mittellinie des Wärmetauscher-Moduls 20 ragt und einen ersten Arm 238 bildet.

In **Fig. 5** ist eine Schnittdarstellung eines Ausschnitts einer weiteren Ausgestaltung eines erfindungsgemäßen Photothermie-Moduls 1 gezeigt, wiederum mit Blick auf eine Querseite entsprechend Fig. 4.

Das wenigstens eine Niederhalteelement 23; 231; 232 kann, wie hier zu sehen, zur Kontaktierung der Rohrleitung 22 vorzugsweise wenigstens einen ersten Arm 238 und wenigstens einen zweiten Arm 239 aufweisen. Der erste Arm 238 kann hierbei soweit in Richtung einer Mittellinie des Wärmetauscher-Moduls 20 in den Bereich oberhalb der Rohrleitung 22 hineinragen, dass der erste Arm 238 sowohl mit Querabschnitten 221 der Rohrleitung 22 als auch mit einem Rücklaufabschnitt 224 der Rohrleitung 22 wechselwirkt. In Fig. 4 entspricht dies, wie oben angeführt, dem Fuß des "P". Der zweite Arm 239 kann in dieser Ausgestaltung zudem vorzugsweise gebogen, insbesondere zur Rohrleitung 22 hin gebogen, ausgebildet sein. Auch der zweite Arm 239 kann vorzugsweise in Richtung einer Mittellinie des Wärmetauscher-Moduls 20 in den Bereich oberhalb der Rohrleitung 22 hineinragen, wobei der zweite Arm 239 dabei - wie dargestellt - besonders bevorzugt ausschließlich mit Querabschnitten 221 der Rohrleitung 22 wechselwirken kann.

Der gebogene zweiten Arm 239 eines derart ausgestalteten Niederhalteelements 23; 231; 232 kann die Rohrleitung vorteilhaft im Querabschnitt 221, also in einem geraden Abschnitt der Rohrleitung 22 und nicht in einem der überwiegend gebogen ausgestalteten Längsabschnitte 222 stützen. In Fig. 5 ist dazu exemplarisch dargestellt, wie der zweite Arm 239 einen Querabschnitt 221 der Rohrleitung 22 an einem vom Rahmen 11 entfernten Abschnitt kontaktiert. Der vom ersten Arm 238 kontaktierte Abschnitt folgt in diesem Beispiel in Richtung des Rahmens 11 erst in einem gewissen Abstand. Zwischen besagtem, vom zweiten Arm 239 kontaktierten Abschnitt und dem vom ersten Arm 238 kontaktierten Abschnitt der Rohrleitung 22 bildet sich in dieser Ausgestaltung der Erfindung somit ein Bereich der Rohrleitung 22 aus, der nicht in direktem Kontakt mit dem Niederhalteelement 23; 231; 232 steht. Durch die gebogene Ausgestaltung des zweiten Arms 239 und/oder die Ausbildung des beschriebenen "nicht direkt kontaktierten Bereichs" ermöglicht das Niederhalteelement 23; 231; 232 in dieser Ausgestaltung eine elastische Stützung der Rohrleitung 22 bzw. der Wärmeabsorber 21 und der Rohrleitung 22, was vorteilhaft das Auftreten einer gegenläufigen Durchbiegung in Querrichtung minimiert und dadurch die Lebensdauer des Photothermie-Moduls 1, insbesondere dessen Photovoltaik-Moduls 10, vorteilhaft erhöht.

Wie in Fig. 5 zu sehen, kann beispielsweise das zweite Niederhalteelement 232 dazu vorzugsweise H-förmig ausgebildet sein, wobei eine Seite des "H" verlängert und gebogen ausgebildet sein kann und soweit in Richtung einer Mittellinie des Wärmetauscher-Moduls 20 in den Bereich oberhalb der Rohrleitung 22 hineinragt, dass es mit einem Querabschnitten 221 der Rohrleitung 22 wechselwirkt (entsprechend einem zweiten Arm 239), während die andere Seite des "H" kürzer ausgebildet sein kann und mit einem Längsabschnitt 222 und dem Rücklaufabschnitt 224 in Wirkverbindung tritt (entsprechend einem ersten Arm 238).

Zur Montage des erfindungsgemäßen Photothermie-Moduls 1 können die Niederhalteelemente 23; 231 bzw. 232 vorteilhaft zwischen die Rohrleitung 22 und den Rahmen 11 geschoben werden, um dann mit besagtem Rahmen 11 in Werkverbindung zu treten und die Rohrleitung 22 wenigstens abschnittsweise zu kontaktieren und erfindungsgemäß samt Wärmeabsorber 21 gegen die Unterseite 102 des Photovoltaik-Moduls 10 zu drücken. Zur Verbindung bzw. Fixierung der Niederhalteelemente 23; 231 bzw. 232 am Rahmen 11 können hierzu, wie bereits oben bei Fig. 4 beschrieben, Fixiermittel 233 vorgesehen sein. Neben einer Ausgestaltung als Nieten oder Schrauben oder Ähnlichem (vgl. Fig. 4) können besagte Fixiermittel 233 auch in Form eines Einrastmechanismus ausgestaltet sein, welcher vorteilhaft eine besonders schnelle Montage aber auch Demontage zu Wartungs- und Reparaturzwecken ermöglichen kann. In Fig. 5 ist ein Beispiel für ein als Einrastmechanismus ausgestaltetes Fixiermittel 233 gezeigt. In diesem Beispiel umfasst der Rahmen 11 an seiner dem Niederhalteelement 23; 231 bzw. 232 zugewandten Seite eine Vertiefung und das Niederhalteelement 23; 231 bzw. 232 an seiner dem Rahmen 11 zugewandten Seite eine, korrespondierend zu besagter Vertiefung ausgestaltete, Erhöhung. Beim Einschieben des Niederhalteelements 23; 231 bzw. 232 zwischen Rohrleitung 22 und Rahmen 11 kann dann besagte Erhöhung in besagte Vertiefung eingreifen oder auch einrasten und vorteilhaft das Niederhalteelement 23; 231 bzw. 232 am Rahmen 11 fixieren, ohne dass weitere Verbindungsmittel (Nieten, Schrauben, etc.) Verwendung finden müssen. Die Anordnung der Erhöhung am Niederhalteelement 23; 231 bzw. 232 und der Vertiefung am Rahmen 11 des als Einrastmechanismus ausgestalteten Fixiermittels 233 kann natürlich auch vertauscht werden. Ein derartiges, als Einrastmechanismus ausgestaltetes Fixiermittel 233, bei dem das Niederhalteelement 23; 231 bzw. 232 und der Rahmen 11 korrespondierend zueinander ausgebildete Strukturen (hier Erhöhung und Vertiefung) aufwiesen, ermöglicht vorteilhaft die schnelle Herstellung und Lösung einer reversible Wirkverbindung zwischen Rahmen 11 und Niederhalteelement 23; 231 bzw. 232 ohne Verwendung weiteren Werkzeugs und verhindert gleichzeitig ein unbeabsichtigtes Herausrutschen oder Lösen des Niederhalteelement 23; 231 bzw. 232 vom Rahmen 11. Die korrespondierend zueinander ausgebildeten Strukturen können dabei insbesondere ein kreisförmiges oder mehreckiges (z.B. dreieckiges), aber auch eine längliches bzw. stabartiges Profil aufweisen.

Sowohl die in Fig. 4 als auch die in Fig. 5 dargestellten Ausgestaltungen eines erfindungsgemäßen Niederhalteelements 23; 231 bzw. 232 können darüber hinaus bevorzugt als Bauteile mit einer Längsseite 236 und einer Querseite 237 ausgebildet sein, wobei die Länge der Längsseite 236 des Niederhalteelements 23; 231 bzw. 232 wenigstens 90 % der Länge der Längsseite 203 bzw. 204 des Wärmetauscher-Moduls 20 oder bevorzugt wenigstens 95 % der Länge der Längsseite 203 bzw. 204 des Wärmetauscher-Moduls 20 betragen kann. In einer besonders bevorzugten Ausgestaltung der Erfindung beträgt die Länge der Längsseite 236 des Niederhalteelements 23; 231 bzw. 232 100 % der Länge der Längsseite 203 bzw. 204 des Wärmetauscher-Moduls 20 und erstreckt sich somit vorteilhaft durchgehend entlang der gesamten Längsseite 203 bzw. 204 des Wärmetauscher-Moduls 20 (vgl. hierzu Fig. 1). Das wenigstens eine Niederhalteelement 23; 231 bzw. 232 kann dabei vorzugsweise als ein einstückiges Bauteil ausgebildet sein. Bei Einwirkung von Wind- und/oder Schneelasten auf besagtes Photothermie-Modul 1 kann durch ein durchgehend entlang eines Großteils der Längsseite 203 bzw. 204 des Wärmetauscher-Moduls 20 verlaufendes, insbesondere einstückig ausgebildetes, Niederhalteelement 23; 231 bzw. 232 ergänzend zum längsseitigen Rahmen 11, die Durchbiegung des Photothermie-Moduls 1 in Längsrichtung vorteilhaft reduziert werden.

In **Fig. 6** ist nun in einer Schnittansicht quer zu einer Längsachse 213 eines Wärmeabsorbers 21 eine erste Ausgestaltung eines erfindungsgemäßen Wärmeabsorbers 21 dargestellt.

Wie bereits erwähnt ist der erfindungsgemäße Wärmeabsorber 21 als ein Bauteil mit Sattelprofil ausgestaltet. Die Kontaktseite 211 ist bevorzugt eben ausgebildet, um einen flächigen Kontakt mit der Unterseite 102 des Photovoltaik-Moduls 10 und somit eine guten Wärmeübertragung zu gewährleisten. Die der Kontaktseite 211 gegenüberliegende Aufnahmeseite 212 ist vorzugsweise in einen Aufnahmebereich 2121 und zwei Flügelbereiche 2122 aufgeteilt, wobei der Aufnahmebereich 2121 bevorzugt aus der Ebene der Flügelbereiche 2122 herausragen kann. Fig. 6 zeigt einen Schnitt durch den Wärmeabsorber 21 senkrecht zu dessen Längsachse 213. Der Aufnahmebereich 2121 erstreckt sich erfindungsgemäß entlang dieser Längsachse 213 und ist dazu eingerichtet, den Querabschnitt 221 der Rohrleitung 22 aufzunehmen, vorzugsweise den Querabschnitt 221 der Rohrleitung 22 reversibel zu fixieren. Dazu kann der Aufnahmebereich 2121 insbesondere einen gabelförmigen Querschnitt mit zueinander gebogenen Gabelzinken 2124 aufweist, wobei eine Länge L der Gabelzinken 2124 länger als ein Radius R der Rohrleitung 22 ist und wobei die Spitzen 2125 der Gabelzinken 2124 einen geringeren Abstand D zueinander haben als der doppelte Radius R, also der Durchmesser, der Rohrleitung 22. Die Gabelzinken 2124 können somit als eine Art "Greifer" wirken, sodass die Rohrleitung 22 ohne Verwendung von zusätzlichem Werkzeug in den Aufnahmebereich 2121 eingerastet bzw. "eingeklickt" werden kann und die Spitzen 2125 der Gabelzinken 2124 die Rohrleitung 22 dann im Aufnahmebereich 2121 reversibel halten. Bei einer Demontage kann die Rohrleitung 22 vorteilhaft ebenfalls ohne Zuhilfenahme von zusätzlichem Werkzeug wieder aus dem Aufnahmebereich 2121 "ausgeklickt" werden. Zur Verbesserung des Wärmeübergangs zwischen dem Aufnahmebereich 2121 und der Rohrleitung 22, insbesondere deren Querabschnitt 221, kann im Kontaktbereich zwischen der Rohrleitung 22 und dem Aufnahmebereich 2121 auch vorzugsweise Wärmeleitpaste aufgetragen sein.

**Fig. 6a** zeigt in einer Schnittansicht quer zu einer Längsachse 213 eines Wärmeabsorbers 21 eine zweite Ausgestaltung eines erfindungsgemäßen Wärmeabsorbers 21.

Der Wärmeabsorber 21, insbesondere dessen Flügelbereiche 2122, können in einer weiteren Ausgestaltung der Erfindung auch wenigstens eine Wärmeleitlamelle 2123 oder, wie zu sehen, bevorzugt mehrere Wärmeleitlamellen 2123 zur weiteren Abführung von Wärme vom Photovoltaik-Modul 10 an die Umgebung umfassen. In dieser Ausgestaltung der Erfindung weisen die Wärmeleitlamellen 2123 vorzugsweise eine maximale Höhe Hₘₐₓ auf, welche kleiner oder gleich einer Höhe H_{R} der dem Aufnahmebereich 2121 abgewandten Seite der Rohrleitung 22 über der Aufnahmeseite 212 ist. Dabei können die Wärmeleitlamellen 2123 nahe dem Aufnahmebereich 2121, wie in Fig. 6a gezeigt, eine größere Höhe H aufweisen als Wärmeleitlamellen 2123 im Flügelbereich 2122, insbesondere nahe einer Längskante 214 des Wärmeabsorbers 21, alternativ dazu (hier nicht gezeigt) können die Wärmeleitlamellen 2123 auch alle die gleiche Höhe H aufweisen, die maximale Höhe Hₘₐₓ soll jedoch - wie beschrieben - in dieser Ausgestaltung stets kleiner oder gleich der zuvor definierten Höhe H_{R} sein. Dadurch kann insbesondere ein Niederhalteelement 23; 231 bzw. 232, welches als ein Bauteil mit einer Längsseite 236 und einer Querseite 237 ausgebildet ist, wobei die Länge der Längsseite 236 des Niederhalteelements 23; 231; 232 wenigstens 90 %, bevorzugt wenigstens 95 % und besonders bevorzugt 100 % der Länge der Längsseite 203 oder 204 des Wärmetauscher-Moduls 20 beträgt, die Rohrleitung 22 kontaktieren und samt Wärmeabsorber 21 gegen die Unterseite 102 des Photovoltaik-Moduls 10 drücken, ohne mit Wärmeleitlamellen 2123 in Berührung zu kommen, welche die Höhe H_{R} der dem Aufnahmebereich 2121 abgewandten Seite der Rohrleitung 22 über der Aufnahmeseite 212 überragen.

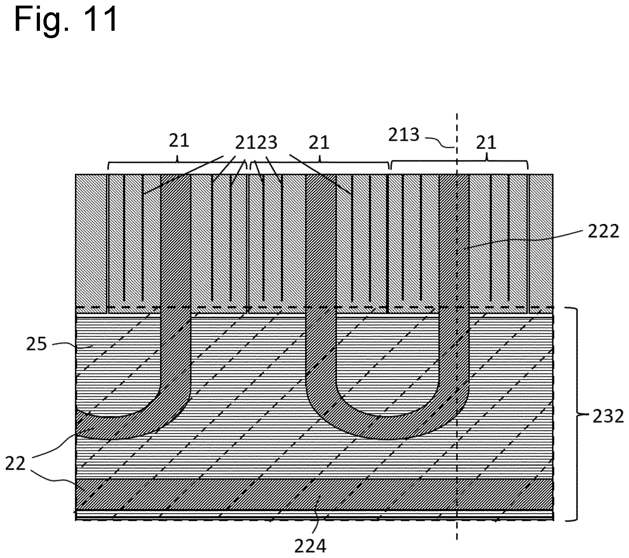

Alternativ zu dieser, in Fig. 6a gezeigten, Ausgestaltung der Erfindung, kann eine Kombination eines Niederhalteelements 23; 231; 232, welches als ein Bauteil mit einer Längsseite 236 und einer Querseite 237 ausgebildet ist, wobei die Länge der Längsseite 236 des Niederhalteelements 23; 231; 232 wenigstens 90 %, bevorzugt wenigstens 95 % und besonders bevorzugt 100 % der Länge der Längsseite 203 oder 204 des Wärmetauscher-Moduls 20 beträgt, mit einem Wärmeabsorber 21, dessen Flügelbereiche 2122 wenigstens eine Wärmeleitlamelle 2123, bevorzugt mehrere Wärmeleitlamellen 2123, aufweist, wobei die Höhe H der Wärmeleitlamellen 2123 die Höhe H_{R} der dem Aufnahmebereich 2121 abgewandten Seite der Rohrleitung 22 über der Aufnahmeseite 212 überragt, also die zuvor definierte Höhe Hₘₐₓ übersteigt, auch insbesondere dadurch realisiert werden, dass der bzw. die Wärmeabsorber 21 in ihrer Erstreckung entlang ihrer Längsachse 213 verkürzt ausgebildet sind. Besagte Erstreckung entlang der Längsachse 213 des jeweiligen Wärmeabsorbers 21 mit Wärmeleitlamellen 2123 kann in dieser weiteren Ausgestaltung der Erfindung vorzugsweise so gewählt werden, dass besagte Wärmeleitlamellen 2123 vor dem Bereich in der Nähe der Längsseiten 103 bzw. 104 des Rahmens 11, in dem das oder die Niederhalteelemente 23; 231 bzw. 232 die Rohrleitung 22 wenigstens abschnittsweise kontaktieren, enden (vgl. hierzu **Fig. 11**). Durch ein gestrichelt gezeichnetes Rechteck begrenzt und gestrichelt schraffiert ist in **Fig. 11** exemplarisch die Position eines zweiten Niederhalteelements 232 angedeutet, welches in diesem Bereich in der Nähe der Längsseiten 103 bzw. 104 des Rahmens 11, die Rohrleitung 22 wenigstens abschnittsweise kontaktieren kann. Wie zu sehen, enden die Wärmeabsorber 21 und deren Wärmeleitlamellen 2123 in dieser Ausgestaltung vor diesem gestrichelt-schraffierten Bereich, wodurch das zweite Niederhalteelement 232 nicht mit den Wärmeleitlamellen 2123 in Berührung kommt und deren Höhe H somit beliebig, insbesondere auch größer als die zuvor definierte Höhe H_{R} sein kann. Zur Abstützung der Längsabschnitte 222 und/oder des Rücklaufabschnitts 224 der Rohrleitung 22 kann in dieser Ausgestaltung wiederum ein Randblech 25 vorgesehen sein, welches in diesem Fall weiter vom Randbereich ins Innere des Photothermie-Moduls 1 hineinragt und den Bereich bis zu den verkürzten Wärmeabsorbern 21 bedecken kann.

**Fig. 7** zeigt in einer Schnittansicht quer zu einer Längsachse 213 eines Wärmeabsorbers 21 eine dritte Ausgestaltung eines erfindungsgemäßen Wärmeabsorbers 21.

Auch in dieser dritten Ausgestaltung der Erfindung kann der Wärmeabsorber 21, insbesondere dessen Flügelbereiche 2122, wenigstens eine Wärmeleitlamelle 2123 oder, wie zu sehen, bevorzugt mehrere Wärmeleitlamellen 2123 zur weiteren Abführung von Wärme vom Photovoltaik-Modul 10 an die Umgebung umfassen. Der Abstand A zwischen den Wärmeleitlamellen 2123 liegt dabei vorzugsweise in einem Bereich zwischen 10 und 25 mm, bevorzugt bei 17 mm. Die Längsabschnitte 222 der Rohrleitung 22 sind auch hier, wie in Fig. 2, als Kreisbögen dargestellt. Um möglichst lange Wärmeleitlamellen 2123 am Wärmeabsorber anordnen zu können, können die Längsabschnitte 222 jedoch auch kurze gerade, parallel zur jeweiligen Längsseite 103 oder 104 verlaufende, Abschnitte umfassen (hier nicht gezeigt, vgl. aber Fig. 3). Um einen Abstand zwischen den Querabschnitten 221 der Rohrleitung 22 von bspw. 93, 5 mm (wie in der Ausgestaltung aus Fig. 2) beibehalten zu können, sollte dann der Bogenradius der entstehenden Einzelbögen des Längsabschnitts 222 auf 36 mm verkleinert werden. Die Ausdehnung des Wärmeabsorbers 21 bezüglich seiner Längsachse 213 kann dadurch vorteilhaft um bis zu 2 cm verlängert werden, was auch die Maximallänge der Wärmeleitlamellen 2123 vorteilhaft erhöhen kann. Die Wärmeleitlamellen 2123 nahe dem Aufnahmebereich 2121 können zudem eine größere Höhe H aufweisen als Wärmeleitlamellen 2123 im Flügelbereich 2122, insbesondere nahe einer Längskante 214 des Wärmeabsorbers 21. Im hier gezeigten Beispiel nimmt die Höhe H der einzelnen Wärmeleitlamellen 2123 jeweils von den Längskanten 214 zum Aufnahmebereich 2121 hin stetig zu. Es könnte jedoch auch eine ungleichmäßige Höhenzunahme der Wärmeleitlamellen 2123 von den Längskanten 214 zum Aufnahmebereich 2121 vorgesehen sein. Wie in Fig. 7 gezeigt, können in dieser Ausgestaltung des Wärmeabsorbers 21 Wärmeleitlamellen 2123 nahe dem Aufnahmebereich 2121 die dem Aufnahmebereich 2121 abgewandte Seite der Rohrleitung 22 über der Aufnahmeseite 212 überragen, also eine größere Höhe H aufweisen, als die zuvor definierte Höhe Hₘₐₓ für die in Fig. 6a gezeigte Ausgestaltung der Erfindung. Für einen jeden Wärmeabsorber 21 kann dann in dieser Ausgestaltung wenigstens ein Niederhalteelement 23; 231 bzw. 232 vorgesehen sein, welches sowohl mit der Rohrleitung 22, insbesondere deren Quer- 221 und/oder Längsabschnitten 222, als auch mit wenigstens einer Wärmeleitlamelle 2123 wirkverbindbar ist. Besonders bevorzugt ist das Niederhalteelement 23; 231 bzw. 232 dabei zwischen den zwei mittleren, nahe der Rohrleitung 22 positionierten Wärmeleitlamellen 2123 oberhalb der Rohrleitung 22 angeordnet, wobei die Wärmeleitlamellen 2123 auf der zur Rohrleitung 22 hin gewandten Seite Führungsschienen für das Niederhalteelement 23; 231 bzw. 232 umfassen können. Das Niederhalteelement 23; 231 bzw. 232 kann, wie gezeigt, beispielsweise als eine Art Riegel mit rechteckigem Querschnitt ausgebildet sein und über die Führungsschienen zur Herstellung einer Wirkverbindung mit der Rohrleitung 22 an seine Position geschoben und dort bspw. wiederum mit Fixiermitteln 233 wie Nieten oder Schrauben oder Ähnlichem mit der oder den Wärmeleitlamellen 2123 verbunden werden.

In **Fig. 8** ist in einer Schnittansicht quer zu einer Längsachse 213 eines Wärmeabsorbers 21 eine vierte Ausgestaltung eines erfindungsgemäßen Wärmeabsorbers 21 mit einer weiteren Ausgestaltung eines Niederhaltelements 23; 231 bzw. 232 gezeigt.

Der Wärmeabsorber 21 umfasst hier wiederum Wärmeleitlamellen 2123 wie bei der Ausgestaltung aus Fig. 7. Das oder die Niederhalteelemente 23; 231 bzw. 232 umfassen in dieser Ausgestaltung jedoch - anders als zuvor - selbst wenigstens eine Wärmeleitlamelle 234, bevorzugt drei Wärmeleitlamellen 234, zur weiteren Abführung von Wärme von der Rohrleitung 22 an die Umgebung. Besagte Wärmeleitlamellen 234 können an der, der Rohrleitung 22 abgewandten Seite des jeweiligen Niederhalteelements 23; 231 bzw. 232 derart angeordnet sein, dass sich eine Art "Fächerprofil" bilden. In Fig. 8 ist ein Beispiel eines solchen "Fächerprofils" im Querschnitt dargestellt. Dabei können die außenliegenden Wärmeleitlamellen 234 bevorzugt abgewinkelt angeordnet sein und vorteilhaft neben ihrer Wärmeabführwirkung auch mit Fixiermitteln 233 zusammenwirken, welche vorzugsweise an den Wärmeleitlamellen 2123 des Wärmeabsorbers 21 angeordnet sind. Im hier gezeigten Beispiel sind die Fixiermittel 233 als Ausbuchtungen in den Wärmeleitlamellen 2123 des Wärmeabsorbers 21, welche dem Aufnahmebereich 2121 am nächsten liegen, ausgebildet und bilden vorteilhaft eine Art "Obere Schiene", welche das jeweilige Niederhalteelement 23; 231 bzw. 232 bezüglich einer Bewegung von der Rohrleitung 22 nach oben weg blockieren und bezüglich einer Bewegung entlang der Längsachse 213 des Wärmeabsorbers 21 führen kann.

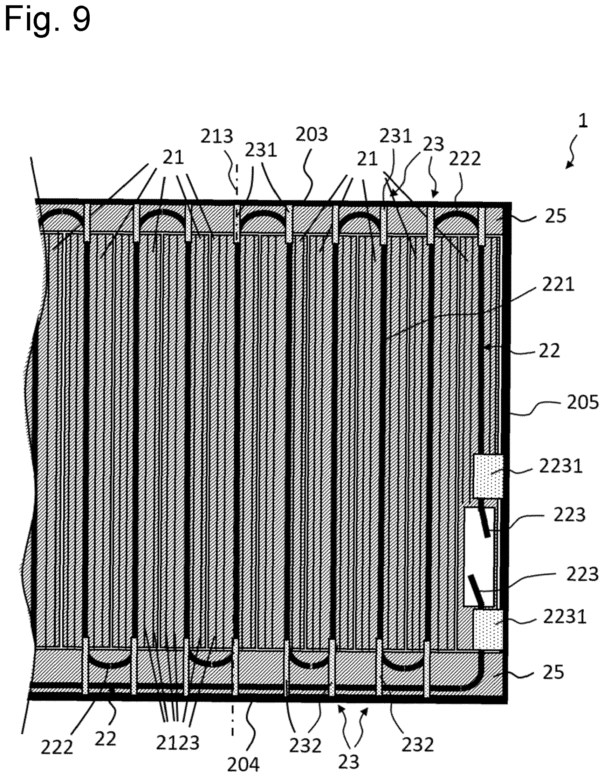

In **Fig. 9** ist ein Ausschnitt einer Ansicht der Unterseite US einer weiteren Ausgestaltung der Erfindung mit einer Vielzahl von Wärmeabsorbern 21 in einer Ausgestaltung wie in Fig. 7 und 8 gezeigt.

Für einen jeden Wärmeabsorber 21 sind in dieser Ausgestaltung vorzugsweise zwei Niederhalteelemente 231 und 232 vorgesehen, welche sowohl mit der Rohrleitung 22 als auch mit wenigstens einer Wärmeleitlamelle 2123 wirkverbindbar sind. Das erste Niederhalteelement 231 kann mit einer ersten Längsseite 103 des Rahmens 11, in dessen Bereich nur Längsabschnitte 222 der Rohrleitung 22 angeordnet sind, und das zweite Niederhalteelement 232 mit einer zweiten 104, der ersten Längsseite 103 gegenüber liegenden, Längsseite des Rahmens 11 in dessen Bereich sowohl Längsabschnitte 222 als auch ein Rücklaufabschnitt 224 der Rohrleitung 22 angeordnet ist, wirkverbindbar sein. Das zweite Niederhalteelemente 232 ragt hierbei vorzugsweise soweit in Richtung einer Mittellinie des Wärmetauscher-Moduls 20 in den Bereich oberhalb der Rohrleitung 22 hinein, dass es sowohl mit Querabschnitten 221 der Rohrleitung 22 als auch mit einem Rücklaufabschnitt 224 der Rohrleitung 22 wechselwirken kann. Auch in dieser Ausgestaltung kann zwischen der Unterseite 102 des Photovoltaik-Moduls 10 und der Kontaktseite 211 des wenigstens einen Wärmeabsorbers 21 bzw. der Vielzahl an Wärmeabsorbern 21 ein Stützblech 24 angeordnet sein.

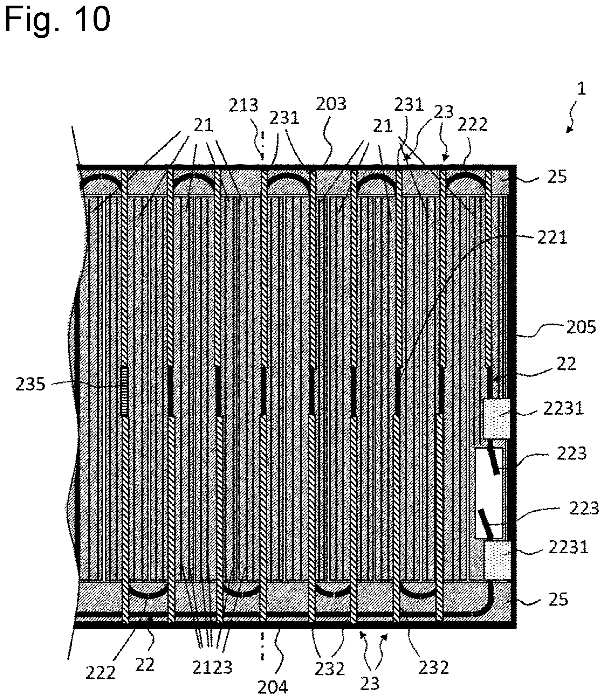

**Fig. 10** zeigt schließlich einen Ausschnitt wie in Fig. 9 mit länger ausgestalteten ersten 231 und zweiten 232 Niederhalteelementen.

Die hier gezeigt Ausgestaltung der Erfindung entspricht derjenigen aus Fig. 9, wobei die Niederhalteelement 231 und 232 hier jeweils weiter Richtung einer Mittellinie des Wärmetauscher-Moduls 20 in den Bereich oberhalb der Rohrleitung 22 hineinragen. Die Lücke zwischen dem ersten Niederhalteelement 231 und dem zweiten Niederhalteelement 232 kann insbesondere in dieser Ausgestaltung mittels eines Befestigungselements 235 gefüllt werden, welches oberhalb der Rohrleitung 22, insbesondere oberhalb ihres Querabschnitts 221, vorzugsweise reversibel anordenbar ist und wenn es zwischen dem ersten 231 und zweiten 232 Niederhalteelement platziert wurde, ein Verschieben besagter Niederhalteelemente entlang der Längsachse 213 des Wärmeabsorbers 21 vorteilhaft zu verhindern vermag. In Fig. 10 ist lediglich ganz links ein derartiges Befestigungselement 235 eingezeichnet, im vollständig zusammengebauten Zustand des Photothermie-Moduls 1 können natürlich bevorzugt alle derartigen Lücken mit Befestigungselementen 235 gefüllt sein. Die Befestigungselement 235 selbst können dazu vorteilhaft - nach der Positionierung der Niederhalteelemente 231 und 232 am jeweiligen Wärmeabsorber 21 - zwischen die Niederhalteelemente 231 und 232 geklemmt bzw. "eingeklickt werden.

Die vorliegende Erfindung betrifft ein Photothermie-Modul 1 wenigstens umfassend: ein Photovoltaik-Modul 10 und wenigstens ein Wärmetauscher-Modul 20 mit einer, mit einem Wärmeabsorber 21 wirkverbundene Rohrleitung 22 zur Aufnahme von Wärmeenergie vom Wärmeabsorber 21 und Leitung eines Wärmetauschermediums. Es zeichnet sich dadurch aus, dass der Wärmeabsorber 21 als ein Bauteil mit Sattelprofil ausgestaltet ist, dessen Aufnahmebereich 2121 eingereicht ist, besagte Rohrleitung 22 aufzunehmen und dass das Wärmetauscher-Modul 20 wenigstens ein Niederhalteelement 23; 231 bzw. 232 umfasst, welches eingerichtet ist, die Rohrleitung 22 samt Wärmeabsorber 21 gegen eine Unterseite 102 des Photovoltaik-Moduls 10 zu drücken. Das erfindungsgemäße Photothermie-Modul 1 weist durch die Bauart des Wärmetauscher-Moduls 20 vorteilhaft eine hohe Eigen-Quersteifigkeit auf, arbeitet besonders energieeffizient und lässt sich vorteilhaft dennoch leicht technisch warten bzw. umrüsten, da die Unterseite US des Photothermie-Moduls 1 größtenteils zugänglich bleibt.

### Bezugszeichenliste

- 1: Photothermie-Modul

- 10: Photovoltaik-Modul (PV-Modul)
- 101: Oberseite
- 102: Unterseite
- 103: erste Längsseite
- 104: zweite Längsseite
- 105: Querseite
- 11: Rahmen

- 20: Wärmetauscher-Modul
- 203: erste Längsseite
- 204: zweite Längsseite
- 205: Querseite
- 206: Unterseite

- 21: Wärmeabsorber
- 211: Kontaktseite
- 212: Aufnahmeseite
- 2121: Aufnahmebereich
- 2122: Flügelbereich
- 2123: Wärmeleitlamellen
- 2124: Gabelzinken
- 2125: Spitze einer Gabelzinke (2124)
- 213: Längsachse des Wärmeabsorbers (21)
- 214: Längskante des Wärmeabsorbers (21)

- 22: Rohrleitung
- 221: Querabschnitt
- 222: Längsabschnitt
- 223: Anschlussstück
- 2231: Niederhalteelement für das Anschlussstück (223)
- 224: Rücklaufabschnitt

- 23: Niederhalteelement
- 231: erstes Niederhaltelement
- 232: zweites Niederhaltelement
- 233: Fixiermittel
- 234: Wärmeleitlamellen des Niederhalteelements (23; 231; 232)
- 235: Befestigungselement
- 236: Längsseite
- 237: Querseite
- 238: erster Arm
- 239: zweiter Arm

- 24: Stützblech

- 25: Randblech

- 4: Junction-Box

- A: Abstand zwischen den Wärmeleitlamellen (2123)
- D: Abstand der Spitzen der Gabelzinken (2124) zueinander
- H: Höhe des Wärmeleitlamelle (2123)
- Hₘₐₓ: maximale Höhe der Wärmeleitlamellen (2123)
- H_{R}: Höhe der dem Aufnahmebereich (2121) abgewandten Seite der Rohrleitung (22) über der Aufnahmeseite (212)
- L: Länge der Gabelzinken (2124)
- OS: Oberseite (=Sonnenseite) des Photothermie-Moduls 1
- R: Radius der Rohrleitung (22)
- US: Unterseite des Photothermie-Moduls 1

## Patentansprüche

1. Photothermie-Modul (1) wenigstens umfassend:
- ein Photovoltaik-Modul (10) mit einer Oberseite (101), einer Unterseite (102) und einem entlang von Längsseiten (103; 104) und/oder Querseiten (105) des Photovoltaik-Moduls (10) verlaufenden Rahmen (11),
- wenigstens ein Wärmetauscher-Modul (20) mit Längsseiten (203; 204) und Querseiten (205)
- wobei das Wärmetauscher-Modul (20) wenigstens einen Wärmeabsorber (21) zum Wärmeaustausch mit dem Photovoltaik-Modul (10) und
- wenigstens eine mit dem Wärmeabsorber (21) wirkverbundene Rohrleitung (22) zur Aufnahme von Wärmeenergie vom Wärmeabsorber (21) und Leitung eines Wärmetauschermediums umfasst,
- wobei die Rohrleitung (22) wenigstens einen Querabschnitt (221), der parallel zu den Querseiten (205) des Wärmetauscher-Moduls (20) verläuft und wenigstens einen Längsabschnitt (222), der entlang der Längsseiten (203; 204) des Wärmetauscher-Moduls (20) verläuft, umfasst;
**dadurch gekennzeichnet,**
- **dass** der Wärmeabsorber (21) als ein Bauteil mit Sattelprofil ausgestaltet ist, wenigstens umfassend
- eine Kontaktseite (211) zur Wirkverbindung mit der Unterseite (102) des Photovoltaik-Moduls (10);
- eine, der Kontaktseite (211) gegenüberliegende Aufnahmeseite (212) mit einem Aufnahmebereich (2121) und zwei den Aufnahmebereich (2121) einfassende Flügelbereiche (2122),
- wobei der Aufnahmebereich (2121) sich wenigstens abschnittsweise entlang einer Längsachse (213) des Wärmeabsorbers (21) erstreckt und eingerichtet ist, den Querabschnitt (221) der Rohrleitung (22) aufzunehmen;
- und wobei die Kontaktseite (211) eingerichtet ist, mit der Unterseite (102) des Photovoltaik-Moduls (10) in unmittelbare oder mittelbare Wirkverbindung zu treten;
und
- **dass** das Wärmetauscher-Modul (20) wenigstens ein Niederhalteelement (23; 231; 232) umfasst,
- wobei das Niederhalteelement (23; 231; 232) im Bereich der Aufnahmeseite (212) des Wärmeabsorbers (21) bezüglich der Unterseite (102) des Photovoltaik-Moduls (10) jenseits der Rohrleitung (22) angeordnet ist;
- wobei das Niederhalteelement (23; 231; 232) im Bereich der Längsseiten (103; 104) des Photovoltaik-Moduls (10) mit dessen Rahmen (11) in Wirkverbindung steht;
- wobei das Niederhalteelement (23; 231; 232) die Rohrleitung (22) wenigstens abschnittsweise kontaktiert,
- und wobei das Niederhalteelement (23; 231; 232) eingerichtet ist, die Rohrleitung (22) samt Wärmeabsorber (21) gegen die Unterseite (102) des Photovoltaik-Moduls (10) zu drücken.

2. Photothermie-Modul (1) nach Anspruch 1, **dadurch gekennzeichnet, dass** der Aufnahmebereich (2121) des Wärmeabsorbers (21) eingerichtet ist, den Querabschnitt (221) der Rohrleitung (22) reversibel zu fixieren.

3. Photothermie-Modul (1) nach Anspruch 1 oder 2, **dadurch gekennzeichnet, dass** der Aufnahmebereich (2121) einen gabelförmigen Querschnitt mit zueinander gebogenen Gabelzinken (2124) aufweist, wobei eine Länge (L) der Gabelzinken (2124) länger als ein Radius (R) der Rohrleitung (22) ist und wobei die Spitzen (2125) der Gabelzinken (2124) einen geringeren Abstand (D) zueinander haben als der doppelte Radius (R) der Rohrleitung (22), sodass die Rohrleitung (22) in den Aufnahmebereich (2121) eingerastet werden kann und die Spitzen (2125) der Gabelzinken (2124) die Rohrleitung (22) dann im Aufnahmebereich (2121) reversibel halten.

4. Photothermie-Modul (1) nach einem der Ansprüche 1 bis 3, **dadurch gekennzeichnet, dass** das Wärmetauscher-Modul (20) eine Vielzahl von Wärmeabsorbern (21) umfasst, deren Kontaktseiten (212) im zusammengesetzten Zustand des Photothermie-Moduls (1) gemeinsam einen Großteil der Unterseite (102) des Photovoltaik-Moduls (10), bevorzugt mehr als 90 %, besonders bevorzugt mehr als 95 %, der Unterseite (102) des Photovoltaik-Moduls (10), bedecken.

5. Photothermie-Modul (1) nach einem oder mehreren der vorherigen Ansprüche, **dadurch gekennzeichnet, dass** zwei Niederhalteelemente (231; 232) vorgesehen sind,
- welche sich entlang der Längsseiten (103;104) des Rahmens (11) erstrecken;
- wobei das erste Niederhalteelement (231) mit einer ersten Längsseite (103) des Rahmens (11), in deren Bereich nur Längsabschnitte (222) der Rohrleitung (22) angeordnet sind, wirkverbindbar ist;
- wobei das zweite Niederhalteelement (232) mit einer zweiten (104), der ersten Längsseite (103) gegenüber liegenden, Längsseite des Rahmens (11) in deren Bereich sowohl Längsabschnitte (222) als auch ein Rücklaufabschnitt (224) der Rohrleitung (22) angeordnet ist, wirkverbindbar ist;
- und wobei das zweite Niederhalteelemente (232) soweit in Richtung einer Mittellinie des Wärmetauscher-Moduls (20) in den Bereich oberhalb der Rohrleitung (22) hineinragt, dass es sowohl mit Querabschnitten (221) der Rohrleitung (22) als auch mit einem Rücklaufabschnitt (224) der Rohrleitung (22) wechselwirken kann.

6. Photothermie-Modul (1) nach einem oder mehreren der vorherigen Ansprüche, **dadurch gekennzeichnet, dass** das wenigstens eine Niederhalteelement (23; 231; 232) als ein Bauteil mit einer Längsseite (236) und einer Querseite (237) ausgebildet ist, wobei die Länge der Längsseite (236) des Niederhalteelements (23; 231; 232) wenigstens 90 % der Länge der Längsseite (203, 204) des Wärmetauscher-Moduls (20), bevorzugt wenigstens 95 % der Länge der Längsseite (203, 204) des Wärmetauscher-Moduls (20), besonders bevorzugt 100 % der Länge der Längsseite (203, 204) des Wärmetauscher-Moduls (20) beträgt.

7. Photothermie-Modul (1) nach einem oder mehreren der vorherigen Ansprüche, **dadurch gekennzeichnet, dass** das wenigstens eine Niederhalteelement (23; 231; 232) als ein einstückiges Bauteil ausgebildet ist.

8. Photothermie-Modul (1) nach einem oder mehreren der vorherigen Ansprüche, **dadurch gekennzeichnet, dass** das wenigstens eine Niederhalteelement (23; 231; 232) zur Kontaktierung der Rohrleitung (22) wenigstens einen ersten Arm (238) und wenigstens einen zweiten Arm (239) aufweist,
- wobei der erste Arm (238) soweit in Richtung einer Mittellinie des Wärmetauscher-Moduls (20) in den Bereich oberhalb der Rohrleitung (22) hineinragt, dass der erste Arm (238) sowohl mit Querabschnitten (221) der Rohrleitung (22) als auch mit einem Rücklaufabschnitt (224) der Rohrleitung (22) wechselwirkt; und
- wobei der zweite Arm (239) gerade oder gebogen, insbesondere zur Rohrleitung (22) hin gebogen, ausgebildet ist und soweit in Richtung einer Mittellinie des Wärmetauscher-Moduls (20) in den Bereich oberhalb der Rohrleitung (22) hineinragt, dass der zweite Arm (239) ausschließlich mit Querabschnitten (221) der Rohrleitung (22) wechselwirkt.

9. Photothermie-Modul (1) nach einem oder mehreren der vorherigen Ansprüche, **dadurch gekennzeichnet, dass** entlang der Längsseiten (103; 104) des Photovoltaik-Moduls (10) im Bereich der Längsabschnitte (222) der Rohrleitung (22) zwischen der Rohrleitung (22) und der Unterseite (102) des Photovoltaik-Moduls (10) jeweils wenigstens ein Randblech (25) angeordnet ist.

10. Photothermie-Modul (1) nach einem oder mehreren der vorherigen Ansprüche, **dadurch gekennzeichnet, dass** der Wärmeabsorber (21), insbesondere dessen Flügelbereiche (2122), wenigstens eine Wärmeleitlamelle (2123), bevorzugt mehrere Wärmeleitlamellen (2123), zur weiteren Abführung von Wärme vom Photovoltaik-Modul (10) an die Umgebung umfasst.

11. Photothermie-Modul (1) nach Anspruch 10, **dadurch gekennzeichnet, dass** bei einem Wärmeabsorber (21) mit mehreren Wärmeleitlamellen (2123)
- der Abstand (A) zwischen den Wärmeleitlamellen (2123) in einem Bereich zwischen 10 und 25 mm, bevorzugt bei 17 mm, liegt;
und/oder
- Wärmeleitlamellen (2123) nahe dem Aufnahmebereich (2121) eine größere Höhe (H) aufweisen als Wärmeleitlamellen (2123) im Flügelbereich (2122), insbesondere nahe einer Längskante (214) des Wärmeabsorbers (21).

12. Photothermie-Modul (1) nach Anspruch 10 oder 11, **dadurch gekennzeichnet, dass** eine maximale Höhe (Hₘₐₓ) der Wärmeleitlamelle oder Wärmeleitlamellen (2123) kleiner oder gleich einer Höhe (H_{R}) der dem Aufnahmebereich (2121) abgewandten Seite der Rohrleitung (22) über der Aufnahmeseite (212) ist.

13. Photothermie-Modul (1) nach Anspruch 10, **dadurch gekennzeichnet, dass** für einen jeden Wärmeabsorber (21) wenigstens ein Niederhalteelement (23; 231; 232) vorgesehen ist, welches sowohl mit der Rohrleitung (22), insbesondere deren Quer- (221) und/oder Längsabschnitten (222), als auch mit wenigstens einer Wärmeleitlamelle (2123) wirkverbindbar ist.

14. Photothermie-Modul (1) nach Anspruch 10, **dadurch gekennzeichnet, dass** für einen jeden Wärmeabsorber (21) zwei Niederhalteelemente (231; 232) vorgesehen sind, welche sowohl mit der Rohrleitung (22) als auch mit wenigstens einer Wärmeleitlamelle (2123) wirkverbindbar sind;
- wobei das erste Niederhalteelement (231) mit einer ersten Längsseite (103) des Rahmens (11), in dessen Bereich nur Längsabschnitte (222) der Rohrleitung (22) angeordnet sind, wirkverbindbar ist;
- wobei das zweite Niederhalteelement (232) mit einer zweiten (104), der ersten Längsseite (103) gegenüber liegenden, Längsseite des Rahmens (11) in dessen Bereich sowohl Längsabschnitte (222) als auch ein Rücklaufabschnitt (224) der Rohrleitung (22) angeordnet ist, wirkverbindbar ist;
- und wobei das zweite Niederhalteelemente (232) soweit in Richtung einer Mittellinie des Wärmetauscher-Moduls (20) in den Bereich oberhalb der Rohrleitung (22) hineinragt, dass es sowohl mit Querabschnitten (221) der Rohrleitung (22) als auch mit einem Rücklaufabschnitt (224) der Rohrleitung (22) wechselwirken kann.

15. Photothermie-Modul (1) nach einem der Ansprüche 11 bis 13, **dadurch gekennzeichnet, dass** das Niederhalteelement (23; 231; 232) oder die Niederhalteelemente (23; 231; 232) wenigstens eine Wärmeleitlamelle (234), bevorzugt drei Wärmeleitlamellen (234), zur weiteren Abführung von Wärme von der Rohrleitung (22) an die Umgebung umfasst.
